(19) **Europäisches Patentamt / European Patent Office / Office européen des brevets**

(11) **EP 4 675 229 A1**

(12) # EUROPEAN PATENT APPLICATION
published in accordance with Art. 153(4) EPC

(43) Date of publication:
07.01.2026 Bulletin 2026/02

(21) Application number: 24763698.8

(22) Date of filing: 20.02.2024

(51) International Patent Classification (IPC):
$G01C\ 21/06^{(2006.01)}$    $A01B\ 69/00^{(2006.01)}$
$G05D\ 1/242^{(2024.01)}$    $G05D\ 1/245^{(2024.01)}$
$G05D\ 1/43^{(2024.01)}$    $G05D\ 1/617^{(2024.01)}$
$G05D\ 1/648^{(2024.01)}$    $G05D\ 1/672^{(2024.01)}$
$G05D\ 105/05^{(2024.01)}$    $G05D\ 105/15^{(2024.01)}$
$G05D\ 107/90^{(2024.01)}$    $G05D\ 109/10^{(2024.01)}$
$G05D\ 111/50^{(2024.01)}$

(52) Cooperative Patent Classification (CPC):
**A01B 69/00; G01C 21/06; G05D 1/242;**
**G05D 1/245; G05D 1/43; G05D 1/617; G05D 1/648;**
**G05D 1/672;** G05D 2105/05; G05D 2105/15;
G05D 2107/90; G05D 2109/10; G05D 2111/50

(86) International application number:
**PCT/JP2024/005887**

(87) International publication number:
**WO 2024/181217 (06.09.2024 Gazette 2024/36)**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH MA MD TN**

(30) Priority: 27.02.2023 JP 2023028485

(71) Applicant: KUBOTA CORPORATION
Osaka-shi, Osaka 556-8601 (JP)

(72) Inventors:
• **MORIMOTO Takanori**
  **Sakai-shi, Osaka 590-0908 (JP)**
• **YAMAGUCHI Kotaro**
  **Sakai-shi, Osaka 590-0908 (JP)**
• **MORISHITA Takafumi**
  **Sakai-shi, Osaka 590-0908 (JP)**

(74) Representative: **Müller-Boré & Partner**
**Patentanwälte PartG mbB**
**Friedenheimer Brücke 21**
**80639 München (DE)**

(54) **TRAVEL ASSISTANCE SYSTEM AND PATH CREATION METHOD**

(57) To cause a working vehicle to stably turn on a sloping ground, a travel assistance system (100) includes a route creator (50) which includes an input interface (52, 54) configured or programmed to receive input of slope information relating to a sloping ground (Hs), and a processor (51) configured or programmed to determine one of boundary directions (T2) by rotating a sloping direction (T1) of the sloping ground (Hs) determined from the slope information by a predetermined angle (θ2) leftward relative to the sloping direction (T1), and the other of the boundary directions (T2) by rotating the sloping direction (T1) by the predetermined angle (θ2) rightward relative to the sloping direction (T1), determine a prohibiting zone (K1) of the sloping ground (Hs) that extends downward from the boundary directions (T2), and a limiting zone (K2) of the sloping ground (Hs) that extends upward from the boundary directions (T2), and create a turn-route-portion-for-sloping-ground (L2b, L2b1 to L2b7) for a working vehicle (1) to turn on the sloping ground (Hs) such that a centrifugal force (F2) toward the prohibiting zone (K2) does not act on the working vehicle (1) and a centrifugal force (F2) toward the limiting zone (K2) acts on the working vehicle (1).

EP 4 675 229 A1

Travel assistance system 100

Working vehicle 1

Fig.1

**Description**

Technical Field

The present invention relates to a technique to cause working vehicles to turn on a sloping ground.

Background Art

For example, in a route generating system disclosed in Patent Literature 1, in order to prevent a working vehicle from sliding down when the working vehicle makes a turn in the headland of a sloping agricultural field, a region definer is configured to, when the slope of the headland in the direction of travel of the working vehicle is above a threshold, increase the headland width to increase the turning radius of the working vehicle or reduce the vehicle speed of the working vehicle compared to the case where the slope is equal or less than the threshold.

Citation List

Patent Literature

PTL 1: Japanese Patent No. 6663366

Summary of Invention

Technical Problem

When the working vehicle turns on the sloping ground, the working vehicle may overturn if a centrifugal force acts on the working vehicle in the direction of the downward slope of the sloping ground. If the turning radius is increased or the vehicle speed of the working vehicle is reduced as in the related art, a centrifugal force acting on the working vehicle decreases, but the working vehicle still may overturn.

In view of the above issue, it is an object of the present invention to cause the working vehicle to stably turn on a sloping ground.

Solution to Problem

Technical solutions of the present invention to achieve the above-described technical object include the following features.

A travel assistance system according to an example embodiment of the present invention includes a route creator including an input interface configured or programmed to receive input of slope information relating to a sloping ground, and a control unit configured or programmed to determine one of boundary directions by rotating a sloping direction of the sloping ground determined from the slope information by a predetermined angle leftward relative to the sloping direction, and the other of the boundary directions by rotating the sloping direction by the predetermined angle rightward relative to the sloping direction, and create a turn-route-portion-for-sloping-ground for a working vehicle to turn on the sloping ground such that only a centrifugal force toward a limiting zone of the sloping ground acts on the working vehicle, the limiting zone being a portion of the sloping ground that extends upward from the boundary directions.

The control unit may be configured or programmed to change the predetermined angle according to an angle of slope of the sloping ground determined from the slope information.

The control unit may be configured or programmed to create the turn-route-portion-for-sloping-ground such that the turn-route-portion-for-sloping-ground does not include a lower arc positioned outside the limiting zone and includes an upper arc positioned within the limiting zone, the lower arc and the upper arc included in an imaginary circle centered on an intersection of the sloping direction of the sloping ground and the boundary directions.

The input interface may be configured or programmed to receive input of agricultural field information indicating an agricultural field, device information relating to a working device connected to the working vehicle, and a working condition relating to work performed by the working device while the working vehicle travels in the agricultural field. The control unit may be configured or programmed to create a plurality of work route portions for the working vehicle to travel to perform work using the working device on an agricultural field map indicating the agricultural field, based on the agricultural field information, the device information, and the working condition, and when determining that the agricultural field is the sloping ground sloping at an angle within a predetermined angle range based on the slope information relating to the agricultural field included in the agricultural field information, create the turn-route-portion-for-sloping-ground for the working vehicle to turn from one of the plurality of work route portions to another of the plurality of work route portions on the agricultural field map.

The control unit may be configured or programmed to, when determining that the agricultural field is a non-sloping ground not sloping or sloping at an angle below the predetermined angle range based on the slope information, create a predetermined normal turn route portion for the working vehicle to turn from one of the plurality of work route portions to another of the plurality of work route portions on the agricultural field map.

The control unit may be configured or programmed to determine an outline, the sloping direction, and an angle of slope of the agricultural field from the agricultural field information, determine a working direction and a headland width from the working condition, and determine a working width of the working device from the device information, define a headland and a central area located inward of the headland on the agricultural field map based on the outline and the headland width of the agricultural field, create the plurality of work route portions in the central area on the agricultural field map based on the working direction and the working width, and create the turn-route-portion-for-sloping-ground extending within the headland or extending in both the headland and the central area of the agricultural field map based on the sloping direction and the angle of slope of the agricultural field and based on the working direction.

The control unit may be configured or programmed to create the turn-route-portion-for-sloping-ground when (i) the angle of slope of the agricultural field determined from the slope information is within the predetermined angle range and (ii) the direction difference between the sloping direction of the agricultural field determined from the slope information and a working direction determined from the working condition is equal to or less than a predetermined value, and stop creating the turn-route-portion-for-sloping-ground when (i) the angle of slope is above the predetermined angle range or (ii) the angle of slope is within the predetermined range but the direction difference is above the predetermined value.

The control unit may be configured or programmed to, when determining that the agricultural field is the sloping ground based on the slope information relating to the agricultural field, determine a travel order in which the plurality of work route portions are to be traveled by the working vehicle based on the sloping direction and the angle of slope of the agricultural field determined from the slope information, and create the turn-route-portion-for-sloping-ground according to the travel order.

The route creator may include a memory and/or a storage to store a plurality of types of turning patterns of the working vehicle. The control unit may be configured or programmed to, when determining that the agricultural field is the sloping ground, select one of the plurality of types of turning patterns based on the sloping direction of the agricultural field determined from the slope information and based on an interval between one of the plurality of work route portions and another of the plurality of work route portions, and create the turn-route-portion-for-sloping-ground using the selected turning pattern.

The control unit may be configured or programmed to determine, from the agricultural field information, which area of the agricultural field and the agricultural field map is a sloping area sloping at an angle within a predetermined angle range and which area of the agricultural field and the agricultural field map is a non-sloping area not sloping or sloping at an angle below the predetermined angle range, create the turn-route-portion-for-sloping-ground for the working vehicle to turn from one of the plurality of work route portions to another of the plurality of work route portions in the sloping area of the agricultural field map, and create a predetermined normal turn route portion for the working vehicle to turn from one of the plurality of work route portions to another of the plurality of work route portions in the non-sloping area of the agricultural field map.

The travel assistance system may include the working vehicle and a display to display the turn-route-portion-for-sloping-ground.

The working vehicle may include a vehicle body to travel, a position detector to detect a position of the vehicle body, and a control device configured or programmed to perform an automatic traveling mode to automatically steer the vehicle body and cause the vehicle body to travel based on the plurality of work route portions output from an output interface included in the route creator, based on the turn-route-portion-for-sloping-ground or the predetermined normal turn route portion output from an output interface, and based on the position of the vehicle body detected by the position detector.

The working vehicle may include the route creator. The control device may be configured or programmed to cause a working device connected to the vehicle body to perform work while automatically steering the vehicle body and causing the vehicle body to travel based on the turn-route-portion-for-sloping-ground output from the route creator and based on the position of the vehicle body detected by the position detector.

The control unit may be configured or programmed to, before performing the automatic traveling mode, create the plurality of work route portions, and output the plurality of work route portions to the control device via the output interface, and before or while performing the automatic traveling mode, create the turn-route-portion-for-sloping-ground or the predetermined normal turn route portions based on the slope information relating to the agricultural field, and output the turn-route-portion-for-sloping-ground or the predetermined normal turn route portion to the control device via the output interface.

A method of creating a route according to an example embodiment of the present invention is a method of creating a route for a working vehicle to travel, the method including causing a route creator to receive, via an input interface, input of slope information relating to a sloping ground, and causing a control unit included in the route creator to determine one of boundary directions by rotating a sloping direction of the sloping ground determined from the slope information by a predetermined angle leftward relative to the sloping direction, and the other of the boundary directions by rotating the sloping direction by the predetermined angle rightward relative to the sloping direction, and create a turn-route-portion-for-sloping-ground for a working vehicle to turn on the sloping ground such that only a centrifugal force toward a limiting zone of the sloping ground acts on the working vehicle, the limiting zone being a portion of the sloping ground that extends upward from the boundary directions. Advantageous Effects of Invention

The present invention makes it possible to cause a working vehicle to stably turn on a sloping ground.

Brief Description of Drawings

[FIG. 1] FIG. 1 is a block diagram of a travel assistance system.
[FIG. 2A] FIG. 2A illustrates a centrifugal force acting on a working vehicle.
[FIG. 2B] FIG. 2B illustrates a sloping ground.
[FIG. 2C] FIG. 2C illustrates a limiting zone in which a centrifugal force acting on a working vehicle is restricted.
[FIG. 3A] FIG. 3A illustrates a route creation screen.
[FIG. 3B] FIG. 3B illustrates a route creation screen after creating a travel route.
[FIG. 4] FIG. 4 illustrates a travel control screen.
[FIG. 5] FIG. 5 is a flowchart showing a procedure of creating work route portions.
[FIG. 6] FIG. 6 illustrates an example of work route portions.
[FIG. 7] FIG. 7 is a flowchart showing a procedure of creating turn route portions.
[FIG. 8A] FIG. 8A illustrates an example of a normal turn route portion when an agricultural field is level or substantially level.
[FIG. 8B] FIG. 8B is an enlarged view of the normal turn route portion shown in FIG. 8A.
[FIG. 9A] FIG. 9A illustrates an example of a turn-route-portion-for-sloping-ground when an agricultural field is a sloping ground.
[FIG. 9B] FIG. 9B is an enlarged view of a turn-route-portion-for-sloping-ground in an area higher than the other areas in the sloping direction shown in FIG. 9A.
[FIG. 9C] FIG. 9C is an enlarged view of a turn-route-portion-for-sloping-ground in an area lower than the other areas in the sloping direction shown in FIG. 9A.
[FIG. 10A] FIG. 10A illustrates an example of a normal turn route portion when an agricultural field is a sloping ground.
[FIG. 10B] FIG. 10B is an enlarged view of a normal turn route portion in an area lower than the other areas in the sloping direction shown in FIG. 10A.
[FIG. 11] FIG. 11 illustrates an example of a turn-route-portion-for-sloping-ground when a working direction is at an angle to the sloping direction of an agricultural field.
[FIG. 12] FIG. 12 illustrates another example of a turn-route-portion-for-sloping-ground when an agricultural field is a sloping ground.
[FIG. 13] FIG. 13 illustrates an example of a turn-route-portion-for-sloping-ground along which a working vehicle sticks out of an agricultural field.
[FIG. 14] FIG. 14 illustrates an example of a turn-route-portion-for-sloping-ground along which a working vehicle does not stick out of an agricultural field.
[FIG. 15] FIG. 15 illustrates an example of a turn-route-portion-for-sloping-ground when a headland width of an agricultural field is increased.
[FIG. 16] FIG. 16 illustrates an example of a turn-route-portion-for-sloping-ground extending in both a headland and a central area of an agricultural field.
[FIG. 17] FIG. 17 illustrates another example of a turn-route-portion-for-sloping-ground when a working direction is at an angle to the sloping direction of an agricultural field.
[FIG. 18A] FIG. 18A illustrates an example of a turn-route-portion-for-sloping-ground when the sloping direction of an agricultural field and a working direction are perpendicular to each other.
[FIG. 18B] FIG. 18B is an enlarged view of a turn-route-portion-for-sloping-ground shown in FIG. 18A.
[FIG. 19] FIG. 19 illustrates an example of a turn-route-portion-for-sloping-ground when the sloping direction of an agricultural field and a working direction are parallel to each other and the interval between work route portions is narrow.
[FIG. 20] FIG. 20 illustrates another example of a turn-route-portion-for-sloping-ground when the sloping direction of an agricultural field and a working direction are perpendicular to each other.
[FIG. 21] FIG. 21 illustrates an example of a turn-route-portion-for-sloping-ground created in a sloping area of an agricultural field and a normal turn route portion created in a non-sloping area of the agricultural field.
[FIG. 22] FIG. 22 is a side view of a working vehicle.

Description of Embodiments

The following discusses example embodiments of the present invention with reference to drawings.

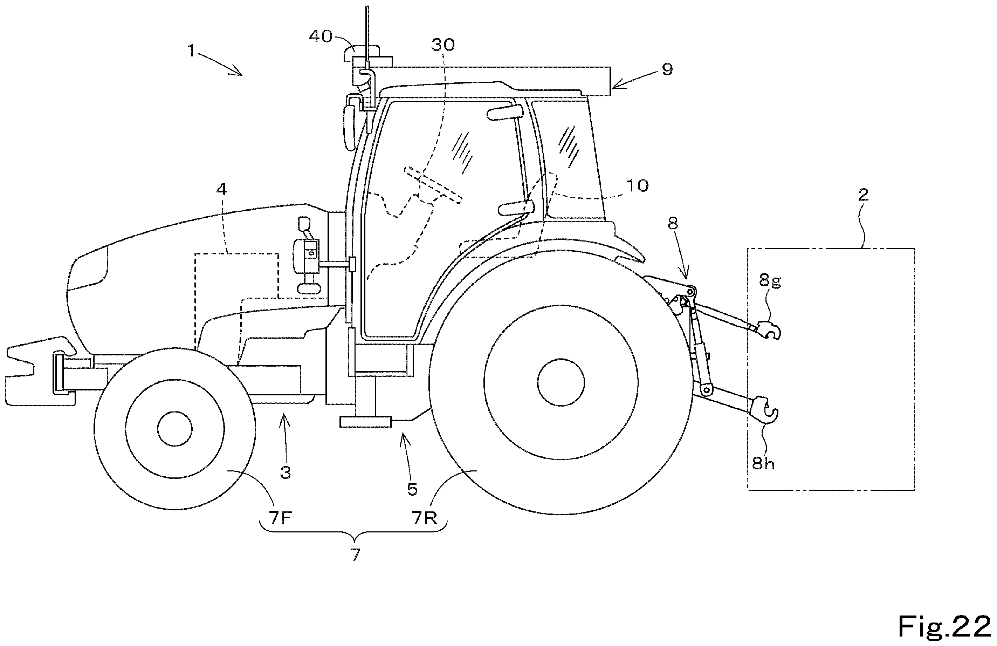

FIG. 22 is a side view of a working vehicle 1. The working vehicle 1 is a tractor. The working vehicle of the present invention is not limited to the tractor, and may be, for example, some other working vehicle to travel such as a rice transplanter or a combine, a construction machine, or some other working vehicle.

The working vehicle 1 includes a vehicle body 3, a prime mover 4, a transmission 5, and a traveling device 7. Front wheels 7F and rear wheels 7R included in the traveling device 7 may be tire wheels or crawler wheels. The prime mover 4 includes a diesel engine, an electronic motor and/or the like. In the present example embodiment, the prime mover 4 includes a diesel engine. The transmission 5 is configured to switch between forward travel and rearward travel of the traveling device 7, as well as to change the propelling force of the traveling device 7 by changing speed stages. The driving force from the prime mover 4 is transmitted to the traveling device 7 via the transmission 5 to drive the traveling device 7, thus causing the vehicle body 3 to travel forward or rearward. In FIG. 22, the left side is the front of the working vehicle 1 (vehicle body 3), and the right side is the rear of the working vehicle 1. In FIG. 22, the far side is the right side of the working vehicle 1 and the near side is the left side of the working vehicle 1.

A cabin 9 is provided on the vehicle body 3 of the working vehicle 1. A seat 10 is provided inside the cabin 9. A lifter 8 including a three-point linkage and/or the like is provided at the rear portion of the vehicle body 3. The lifter 8 is configured to connect thereto a working device 2 to perform agricultural work. Specifically, the working device 2 is connectable to connectors 8g and 8h of the lifter 8. By connecting the working device 2 to the connectors 8g and 8h, the working device 2 and the working vehicle 1 (vehicle body 3) are connected, allowing the working vehicle 1 to tow the working device 2. Instead of or in addition to such a towed working device 2, a direct-mounting working device directly mounted on the vehicle body 3 of the working vehicle 1 may be used.

Examples of the working device 2 include tillers (rotary tillers) to perform tillage on an agricultural field, spreaders to spread fertilizers, chemicals or the like, earthing up devices to perform earthing up (also called ridgers to perform ridging), seeders to sow seeds, transplanters to transplant seedlings, and harvesters to harvest.

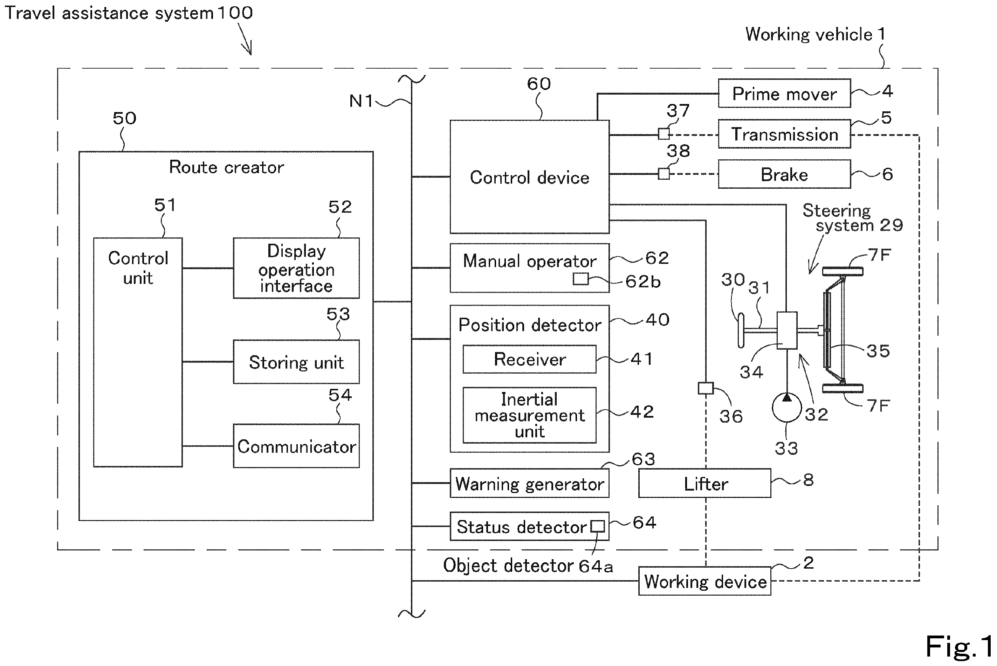

FIG. 1 is a block diagram of a travel assistance system 100. The travel assistance system 100 includes a working vehicle 1 and a route creator 50. The travel assistance system 100 and the route creator 50 assist in the travel of the working vehicle 1 and agricultural work performed by the working device 2.

The working vehicle 1 includes a control device 60, a manual operator 62, a prime mover 4, a transmission 5, a brake 6, a steering system 29, a lifter 8, a position detector 40, a warning generator 63, and a status detector 64. The working vehicle 1 includes an in-vehicle network N1 such as LAN and/or CAN. The in-vehicle network N1 is connected to the control device 60, the manual operator 62, the position detector 40, the warning generator 63 and the status detector 64. The travel assistance system 100 includes these devices included in the working vehicle 1.

The control device 60 includes an electronic control unit (ECU) including CPU(s) and one or more internal memories. The one or more internal memories of the control device 60 include a volatile memory and a nonvolatile memory. The control device 60 controls operations of each element of the working vehicle 1 based on software program(s) and control data stored in the internal memory. The control device 60 is configured or programmed to control the travel of the working vehicle 1 and the operation of the working device 2. The manual operator 62 includes switch(es), lever(s), pedal(s), other keys and/or the like to be operated by a user such as a driver seated on the seat 10 and a worker near the working vehicle 1.

The prime mover 4 (engine) is controlled by the control device 60 as to driving, stopping, and the rotation speed thereof. The transmission 5 is connected to a control valve 37. The control valve 37 is a solenoid valve to be actuated based on a control signal transmitted from the control device 60. The control valve 37 is supplied with hydraulic fluid delivered by a hydraulic pump 33. Although the control valve 37 is depicted as a single block in FIG. 1, one or more control valves are provided appropriately depending on the number of hydraulic devices such as hydraulic clutch(es) and/or hydraulic cylinder(s) of the transmission 5.

The brake 6 is connected to a control valve 38. The control valve 38 is a solenoid valve to be actuated based on a control signal transmitted from the control device 60. The control valve 38 is supplied with hydraulic fluid delivered by the hydraulic pump 33. The control device 60 actuates the brake 6 to brake the traveling vehicle body 3 by electrically controlling the switching position and the opening of the control valve 38.

The control device 60 electrically controls the switching position (opening) of the control valve 37 to control driving of the transmission 5. The transmission 5 transmits the driving force of the prime mover 4 to the traveling device 7 to actuate the traveling device 7 to cause the vehicle body 3 to travel forward or rearward. For example, when the working device 2 performs ground work, the transmission 5 transmits the driving force of the prime mover 4 to the working device 2. This increases the force to actuate the working device 2.

The control device 60 communicates with the working device 2 via the in-vehicle network N1. Specifically, the working device 2 includes a control unit and a communicator (not shown). The control device 60 transmits a work instruction to the working device 2 via the in-vehicle network N1. The control unit of the working device 2, upon receiving the work instruction via the communicator, controls the operation of elements of the working device 2 based on the work instruction to cause the working device 2 to perform agricultural work (ground work). The control unit of the working device 2 transmits information or data indicating a working status and/or the like to the control device 60 over the in-vehicle network N1 via the communicator. The control device 60 detects the working status and/or the like of the working device 2 based on the information or the data received from the working device 2 via the in-vehicle network N1.

Some working devices 2 may not include the control unit or the communicator. When using such a working device 2, the control device 60 does not perform communication with the working device 2 via the in-vehicle network N1, but controls the operation of the working device 2 and detects the working status and/or the like of the working device 2 by causing the lifter 8 to raise or lower the working device 2 to change the position of the working device 2 (described later).

The steering system 29 includes a steering wheel 30, a steering shaft (rotation shaft) 31, and an assist mechanism (power steering mechanism) 32. The steering wheel 30 is provided inside the cabin 9 (FIG. 22). The steering shaft 31 rotates as the steering wheel 30 is rotated. The assist mechanism 32 assists in steering using the steering wheel 30.

The assist mechanism 32 includes a control valve 34 and a steering cylinder 35. The control valve 34 is a solenoid valve to be actuated based on a control signal transmitted from the control device 60. Specifically, the control valve 34 includes a three-position switching valve to be switched by the movement of a spool or the like. The control valve 34 is supplied with hydraulic fluid delivered by the hydraulic pump 33. The control device 60 electrically controls the switching position and the opening of the control valve 34 to adjust the hydraulic pressure applied to the steering cylinder 35 to extend or retract the steering cylinder 35. The steering cylinder 35 is connected to knuckle arms 39 to change the orientation of the front wheels 7F.

The control valve 34 is switchable also by the rotation of the steering shaft 31. Specifically, when the steering wheel 30 is operated, the steering shaft 31 rotates according to the manner in which the steering wheel 30 is operated, and the switching position and the opening of the control valve 34 are switched. The steering cylinder 35 extends or retracts leftward or rightward with respect to the vehicle body 3 according to the switching position and the opening of the control valve 34. The extension or retraction of the steering cylinder 35 changes the steering direction of the front wheels 7F. It is noted that the above-mentioned steering system 29 is merely an example, and not limited to the above-described configuration.

The vehicle body 3 of the working vehicle 1 is configured to be manually steered by manually operating the steering wheel 30 and to be automatically steered by the control device 60. Furthermore, the vehicle body 3 is configured to travel or stop when the transmission 5 or the brake 6 is actuated according to the manual operation of the accelerator or the braking pedal (not shown both) included in the manual operator 62. Furthermore, the vehicle body 3 is configured to be caused to automatically travel or stop by the control device 60 controlling the transmission 5 and the brake 6. In other words, the working vehicle 1 is configured to perform a manual operation in which the user performs operations relating to travel and steering, an automatic operation in which the control device 60 automatically performs travel and steering, and an auto-steer control (also referred to as automatic steering control or semi-automatic operation) in which the control device 60 automatically performs steering and the user performs operations relating to travel.

The lifter 8 includes a hydraulic cylinder as an actuator. The hydraulic cylinder is connected to the control valve 36. The control valve 36 is a solenoid valve to be actuated based on a control signal transmitted from the control device 60. The control valve 36 is supplied with hydraulic fluid delivered by the hydraulic pump 33. The control device 60 electrically controls the switching position or the opening of the control valve 36 to adjust the hydraulic pressure applied to the hydraulic cylinder of the lifter 8 to extend or retract the hydraulic cylinder. The hydraulic cylinder of the lifter 8 extends or retracts, thus causing the connectors 8g and 8h (FIG. 22) to move up or down to raise or lower the working device 2 connected to the connectors 8g and 8h.

The position detector 40 shown in FIG. 1 includes a receiver 41 and an inertial measurement unit (IMU) 42. The receiver 41 receives satellite signal(s) (positions of positioning satellite(s), transmission time(s) and/or the like) transmitted from a satellite positioning system (positioning satellite(s)) such as GPS, GLONASS, BeiDou, Galileo, Quasi-Zenith Satellite System (Michibiki) or the like. The position detector 40 detects the current position (e.g., latitude, longitude) based on the satellite signals received by the receiver 41. That is, the position detector 40 is configured to detect the position of the working vehicle 1 (traveling vehicle body 3) using a satellite positioning system. The inertial measurement unit 42 includes an acceleration sensor, a gyroscope sensor and/or the like. The inertial measurement unit 42 detects the roll angle, the pitch angle, the yaw angle and/or the like of the vehicle body 3. The warning generator 63 includes a beeper, a speaker, a warning light and/or the like provided in or on the vehicle body 3. The warning generator 63 outputs a warning using sound or light to people around the vehicle body 3.

The status detector 64 includes sensor(s) and/or the like provided at some positions in or on the working vehicle 1 and/or the working device 2. The status detector 64 detects the operating status (driven state, stopped state, working position, and/or the like) of each of the elements including the transmission 5, the brake 6, the traveling device 7, the lifter 8, the steering system 29 and/or the manual operator 62 of the working vehicle 1 based on output signal(s) from the sensors and/or the like. The status detector 64 also detects the operating status of the working device 2 based on the output signal(s) from the sensors and/or the like. The status detector 64 detects the rotation speed of the rear wheels 7R included in the traveling device 7 or travel motor(s) (not shown) based on the output signal(s) from the sensors and/or the like to calculate the vehicle speed (travel speed) of the working vehicle 1 (vehicle body 3) from the rotation speed.

The status detector 64 includes object detector(s) 64a, laser sensor(s) such as LiDAR sensor(s), ultrasonic sensor(s), camera(s) and/or the like. The laser sensors, ultrasonic sensors, cameras and/or the like are provided at front, rear, left and right sides of the vehicle body 3. Each object detector 64a detects the presence or absence of objects in a surrounding area of the working vehicle 1 and the working device 2 and the distance to the objects, etc., based on output signals from the laser sensors or ultrasonic sensors. Furthermore, each object detector 64a detects the presence or absence of objects in the surrounding area of the working vehicle 1 and the working device 2 based on captured image(s) of the surrounding area of the working vehicle 1 and the working device 2 captured by camera(s). That is, the status detector 64 detects the status of the surrounding area of the working vehicle 1 using the laser sensor(s), ultrasonic sensor(s), camera(s) and/or the like.

The route creator 50 includes a portable tablet computer, for example. The route creator 50 is provided, for example, inside the cabin 9 of the working vehicle 1 and configured to be attached to and detached from the working vehicle 1. In other words, the working vehicle 1 includes the route creator 50. The route creator 50 is detachable from the working vehicle 1.

The route creator 50 includes a control unit 51, a display operation interface 52, a storing unit (memory and/or storage) 53 and a communicator 54. The control unit 51 is a processor of the route creator 50, and includes CPU(s) and one or more internal memories. The one or more internal memories of the control unit 51 include a volatile memory and a nonvolatile memory.

The display operation interface 52 includes a touchscreen, and displays various information on a screen. The user performs a predetermined operation on the display screen of the display operation interface 52, so that various information and instructions are input. The display operation interface 52 functions as a display, an output interface and an input interface of the route creator 50. The display operation interface 52 is a user interface. The route creator 50 may include a display, an output interface, and an input interface which are independent of each other instead of the display operation interface 52.

The storing unit 53 includes a nonvolatile memory and/or the like. The storing unit 53 is a read/write storing unit to store information or data relating to assists of travel of the working vehicle 1 and work performed by the working device 2. The control unit 51 controls each element of the route creator 50 based on software program(s) and control data, etc., stored in the storing unit 53 or the internal memory.

The communicator 54 includes a communication interface to connect to external network(s) such as the in-vehicle network N1 and/or the Internet. The control unit 51 communicates with the control device 60, the manual operator 62, the position detector 40, the warning generator 63, the status detector 64 and the working device 2 over the in-vehicle network N1 via the communicator 54. The control unit 51 also communicates with external device(s) over an external network via the communicator 54 to transmit information to the external device and receive information from the external device. The communicator 54 functions as an output interface and an input interface to output (transmit) information, data and instructions to the working vehicle 1 or the external device and input (receive) information, data and instructions from the working vehicle 1 or the external device.

Information is input into the route creator 50 via the display operation interface 52 or the communicator 54 and stored in the storing unit 53 or the internal memory of the control unit 51. The input information includes agricultural field information indicating an agricultural field, vehicle information indicating the working vehicle 1, device information indicating the working device 2, a working condition relating to agricultural work performed by the working device 2 while the working vehicle 1 travels in the agricultural field, and/or the like. The control unit 51 creates a travel route to be traveled by the working vehicle 1 that includes work route portion(s) for the working vehicle 1 to travel to perform agricultural work with the working device 2 and turn route portion(s) for the working vehicle 1 to turn, based at least on the agricultural field information, device information and working condition.

The agricultural field information includes identification information, position (coordinates), outline, area, and slope information relating to the agricultural field. Of these, the slope information includes the sloping direction and the angle of slope (gradient) of the agricultural field, the altitude at each portion in the agricultural field, and/or the like. The device information includes information indicating specifications (including dimensions, performance, identification information and/or the like) of the working device 2. The working condition includes the category of agricultural work, working direction, headland width and/or the like. The vehicle information relating to the working vehicle 1 includes information indicating specifications (including dimensions, performance, identification information and/or the like) of the working vehicle 1. The vehicle information relating to the working vehicle 1 is also stored in a memory provided inside the control device 60. The control unit 51 may be configured or programmed to create the travel route for the working vehicle 1 based on the vehicle information relating to the working vehicle 1 in addition to the agricultural field information, device information and working condition.

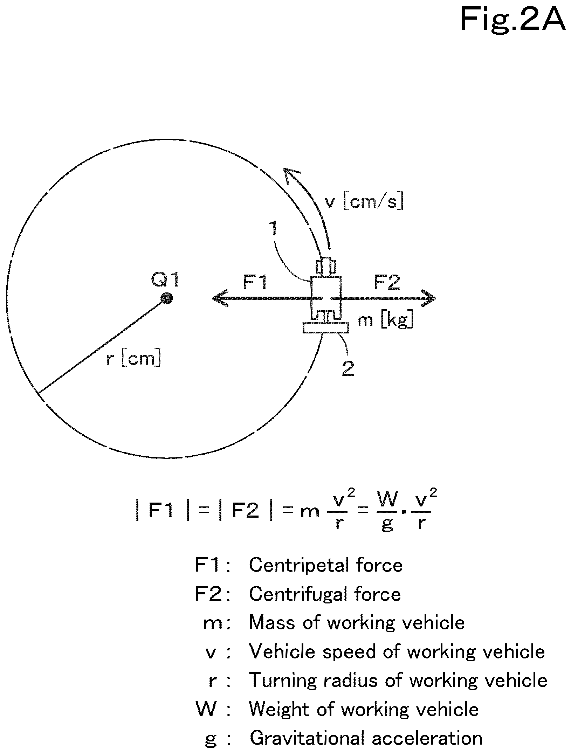

As shown in FIG. 2A, when the working vehicle 1 turns, a centripetal force F1 toward a center of orbit Q1 and a centrifugal force F2 toward a direction opposite to the direction of the centripetal force F1 act on the working vehicle 1. The absolute values of the centripetal force F1 and the centrifugal force F2 are equal. The absolute values of the centripetal force F1 and the centrifugal force F2 when the working vehicle 1 performs a uniform circular motion is determined using the following equation (1):

$$ |F1| = |F2| = m \cdot v^2/r = W/g \cdot v^2/r \quad ... \quad (1), $$

where m is the mass of the working vehicle 1, v is the vehicle speed of the working vehicle 1, r is the turning radius of the working vehicle 1, W is the weight of the working vehicle 1, and g is the gravitational acceleration.

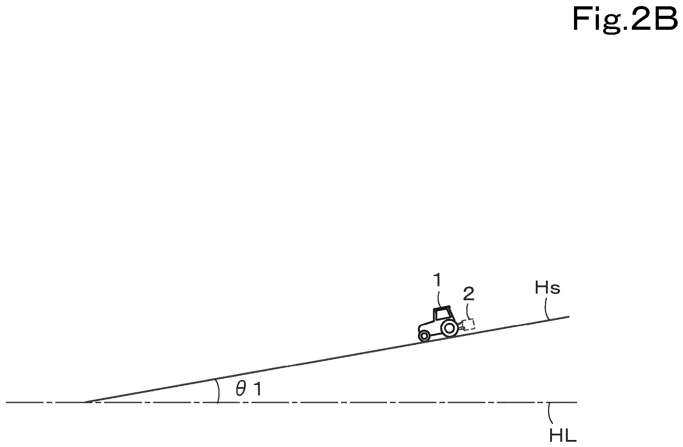

For example, if the centrifugal force F2 acts on the working vehicle 1 downward (toward a lower level) along a sloping ground Hs when the working vehicle 1 turns on the sloping ground Hs as shown in FIG. 2B, the working vehicle 1 may overturn. In view of this, the control unit 51 creates a turn-route-portion-for-sloping-ground which is for the working vehicle 1 to turn on the sloping ground Hs and in which the direction of the centrifugal force F2 acting on the working vehicle 1 is restricted, based on the slope information relating to the sloping ground Hs input via the display operation interface 52 and/or the like.

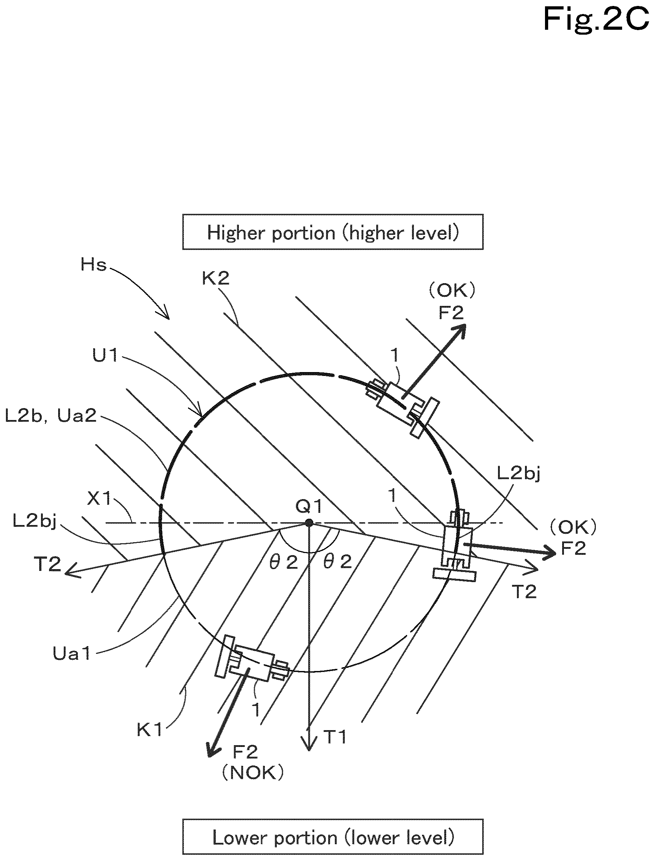

Specifically, the control unit 51 determines the sloping direction T1 of the sloping ground Hs and the angle of slope θ1 of the sloping ground Hs (angle of slope of the sloping ground Hs with respect to a horizontal line HL, i.e. gradient) from the slope information relating to the sloping ground Hs input via the display operation interface 52 and/or the like. The control unit 51, for example, as shown in FIG. 2C, determines one of a pair of left and right boundary directions T2 by rotating the sloping direction T1 by a predetermined acute angle θ2 leftward relative to the sloping direction T1 and the other of the pair of left and right boundary directions T2 by rotating the sloping direction T1 by the predetermined acute angle θ2 rightward relative to the sloping direction T1. The control unit 51 then determines a prohibiting zone K1 of the sloping ground Hs that extends downward from the boundary directions T2 (downward along the sloping direction T1), and a limiting zone K2 of the sloping ground Hs that extends upward from the boundary directions T2 (upward along the sloping direction T1). The boundary directions T2 are included in the limiting zone K2. The control unit 51 changes the predetermined angle θ2 according to at least one of the sloping direction T1 or the angle of slope θ1 of the sloping ground Hs. With this, the boundary directions T2 and the limiting zone K2 are determined according to the slope state of the sloping ground Hs.

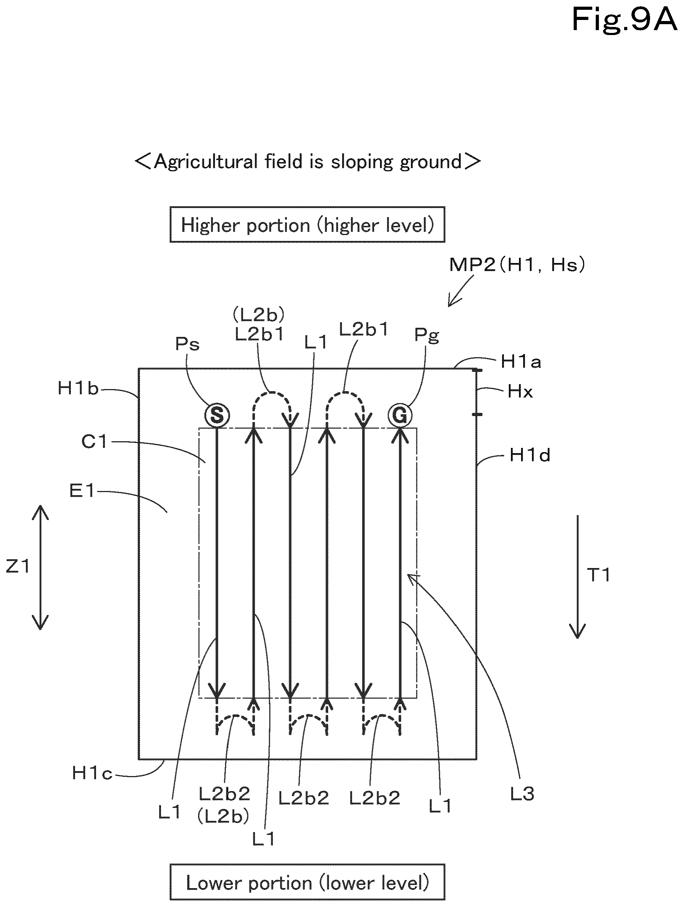

The control unit 51 then creates a turn-route-portion-for-sloping-ground L2b (see FIG. 9A, etc. described later) such that the turn-route-portion-for-sloping-ground L2b does not include any portion of a lower arc Ua1 positioned within the prohibiting zone K1 (outside the limiting zone K2), and includes at least a portion of an upper arc Ua2 positioned within the limiting zone K2. The lower arc Ua1 and the upper arc Ua2 are included in an imaginary circle U1 centered on an intersection Q1 of the sloping direction T1 of the sloping ground Hs and the boundary directions T2. The turn-route-portion-for-sloping-ground L2b shown in FIG. 2C is the same as the upper arc Ua2.

When the working vehicle 1 turns on the sloping ground Hs along the turn-route-portion-for-sloping-ground L2b created as described above, the centrifugal force F2 toward the prohibiting zone K1 does not act on the working vehicle 1 and only the centrifugal force F2 toward the limiting zone K2 acts on the working vehicle 1. In other words, the centrifugal force F2 downward (toward a lower level) along the sloping ground Hs does not or substantially does not act on the working vehicle 1, and the centrifugal force F2 upward (toward a higher level) along the sloping ground Hs acts or substantially acts on the working vehicle 1.

Opposite end portions L2bj ("T2bj" in FIG. 2C) of the turn-route-portion-for-sloping-ground L2b (upper arc Ua2) are positioned lower than the center Q1 in the sloping direction T1. Thus, when the working vehicle 1 turns along each end portion L2bj, the centrifugal force F2 downward in the sloping direction T1 acts on the working vehicle 1. However, when the centrifugal force acting on the working vehicle 1 at the end portion L2bj is decomposed into a downward centrifugal force along the sloping direction T1 and a centrifugal force in the direction of a contour line, the centrifugal force acting downward along the sloping direction T1 is much smaller than the centrifugal force in the direction of the contour line. Thus, although the centrifugal force F2 downward in the sloping direction T1 acts on the working vehicle 1 at the end portion L2bj, the working vehicle 1 is not likely to overturn.

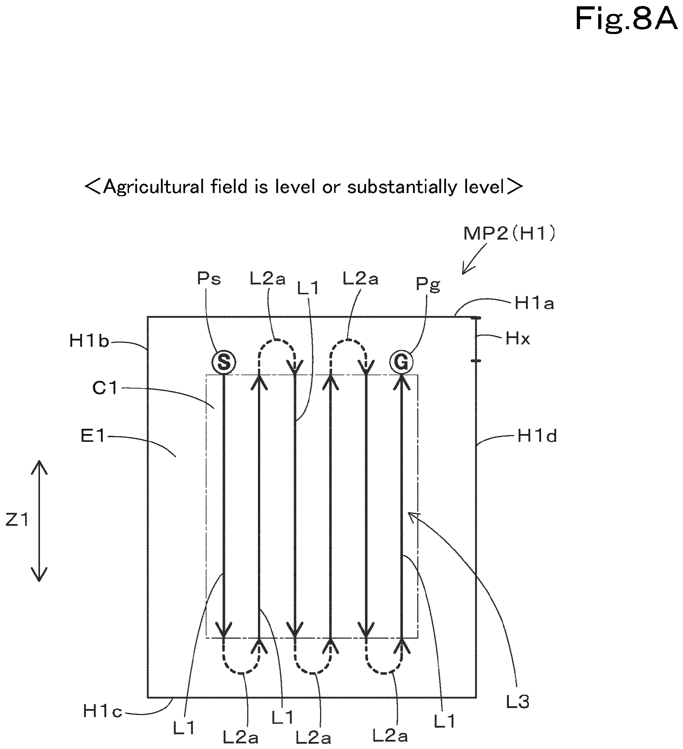

Also in the case where the agricultural field in which the working vehicle 1 and the working device 2 perform work (agricultural work) is a sloping ground Hs sloping at an angle within a predetermined angle range, the control unit 51 creates the turn-route-portion-for-sloping-ground L2b which is for the working vehicle 1 to turn in the agricultural field and in which the direction of the centrifugal force F2 acting on the working vehicle 1 is restricted, based on the slope information relating to the agricultural field. When the agricultural field is a non-sloping ground not sloping or sloping at an angle below the predetermined angle range (level ground or ground sloping at a very small angle, i.e., level or substantially level), the control unit 51 creates a predetermined normal turn route portion L2a (see FIG. 8A etc. described later) for the working vehicle 1 to turn in the agricultural field. The predetermined normal turn route portion L2a is a route portion in which the direction of the centrifugal force F2 acting on the working vehicle 1 is not restricted.

As described above, when the agricultural field information, device information, a working condition and/or the like are input and the travel route is created by the route creator 50, the control unit 51 transmits the information (data) such as the agricultural field information, device information, working condition, the travel route and/or the like to the control device 60 of the working vehicle 1 via the communicator 54. The control device 60 performs an automatic working mode (automatic operation of the working vehicle 1) in which the control device 60 causes the working device 2 to perform agricultural work (ground work) on the agricultural field while automatically causing the working vehicle 1 (vehicle body 3) to travel and steering the working vehicle 1 (vehicle body 3) by controlling driving of the prime mover 4, the transmission 5, the brake 6, the steering system 29, the lifter 8 and the working device 2 based on the agricultural field information, device information, working condition, travel route, the position of the working vehicle 1 (vehicle body 3) detected by the position detector 40, detection result(s) from the status detector 64 and/or the like.

The control device 60 is configured or programmed to also perform an automatic steering operation in which the control device 60 causes the working device 2 to perform agricultural work on the agricultural field while allowing the working vehicle 1 (vehicle body 3) to be manually operated to travel and automatically steering the working vehicle 1 based on the above-described information. During the automatic steering operation, a driver of the working vehicle 1 operates an accelerator or a brake included in the manual operator 62 (FIG. 1) to change the travel speed of the vehicle body 3 according to the operation.

The working vehicle 1 is also configured to be manually operated to travel and be steered, and configured to perform agricultural work using the working device 2 while the working vehicle 1 is caused to travel by the manual operation. The manual operation of the working vehicle 1 includes changing the travel speed of the vehicle body 3 by the driver manipulating the accelerator or the brake of the manual operator 62, and steering the vehicle body 3 by the driver manipulating the steering wheel 30 (FIG. 1).

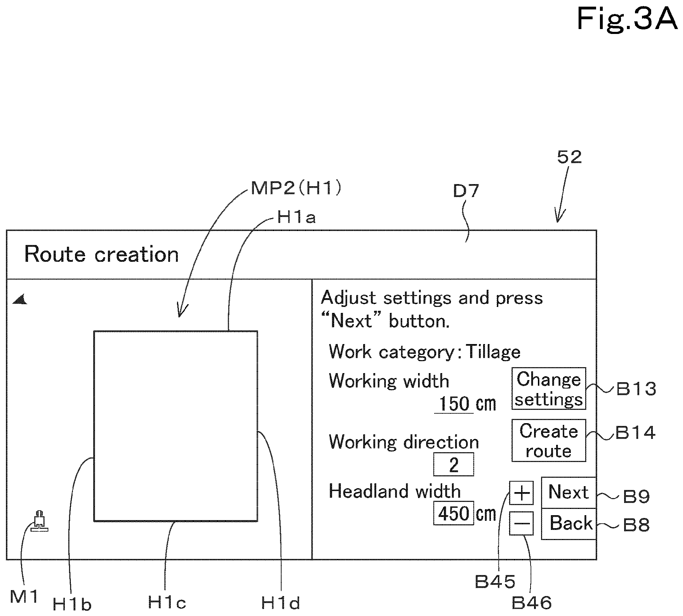

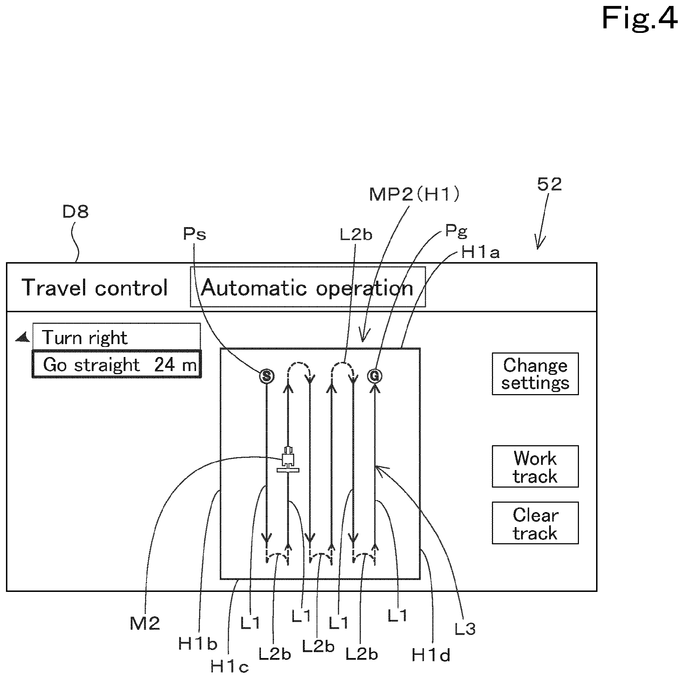

FIGS. 3A to 4 illustrate examples of screens displayed by the display operation interface 52 of the route creator 50. After starting up the route creator 50, a user performs a predetermined action on the display operation interface 52, so that the control unit 51 causes the display operation interface 52 to display a route creation screen D7 as shown in FIG. 3A. The storing unit 53 stores data relating to the route creation screen D7 and data relating to a travel control screen D8 shown in FIG. 4. The control unit 51 reads the data relating to the route creation screen D7 or the travel control screen D8 from the storing unit 53 and causes the display operation interface 52 to display the route creation screen D7 or the travel control screen D8 based on the data. The same applies to the other screens described later.

As shown in FIG. 3A, the route creation screen D7 displays an agricultural field map MP2, a working vehicle symbol M1, the category of agricultural work performed by the working device 2 (tillage in the example shown in FIG. 3A), the working width of the working device 2, a working condition, other keys and the like. The control unit 51 displays, on the route creation screen D7, the agricultural field map MP2 indicating an agricultural field H1 and the category of agricultural work designated by the user in advance (before the route creation screen D7 is displayed). Furthermore, the control unit 51 displays the working width indicated by the device information relating to the working device 2 input in advance on the route creation screen D7. As another example, the control unit 51 may be configured or programmed to display the category of agricultural work on the route creation screen D7 according to the type of working device 2 indicated by the device information relating to the working device 2.

It is noted that the user can, after operating (tapping) a "change settings" key B13 on the route creation screen D7, perform predetermined action(s) on the display operation interface 52 to change the agricultural field map MP2 and the working width of the working device 2. In this case, the control unit 51 displays the agricultural field map MP2 and the working width of the working device 2 changed by the user on the route creation screen D7.

The user inputs the working direction and the headland width, included in the working condition, and changes the input working direction and headland width, on the route creation screen D7. The working direction is a direction along which agricultural work is performed by the working device 2 while the working vehicle 1 travels straight back and forth in the agricultural field H1. The headland width is the width of a headland provided at edge(s) of the agricultural field H1. The user selects a number input box for each item and operates a plus key B45 or a minus key B46 on the route creation screen D7 to input numbers in the number input boxes.

Specifically, the user inputs, as the working direction, one of directions parallel to respective agricultural field edges H1a to H1e of the outline of the agricultural field map MP2. More specifically, after tapping the number input box for the working direction, the user appropriately operates the plus key B45 or the minus key B46 to input a predetermined number (for example, "1", "2", etc.) in the number input box for the working direction, thus designating the agricultural field edge corresponding to the number as a reference edge and inputting the direction parallel to the reference edge as the working direction.

For example, in the case of the rectangular agricultural field map MP2 as shown in FIG. 3A, one of the agricultural field edges H1a to H1d is designated as the reference edge, and an up-down direction or a left-right direction parallel to the reference edge can be input as the working direction. In the present example, the user inputs the number "2" corresponding to the agricultural field edge H1b in the number input box for the working direction on the route creation screen D7 to designate the agricultural field edge H1b as the reference edge, thus determining the up-down direction parallel to the agricultural field edge H1b as the working direction.

When the user inputs the number "4" corresponding to the agricultural field edge H1d in the number input box for the working direction to designate the agricultural field edge H1d as the reference edge, the up-down direction parallel to the agricultural field edge H1d is determined as the reference edge. When the user inputs the number "1" corresponding to the agricultural field edge H1a or the number "3" corresponding to the agricultural field edge H1c in the number input box for the working direction to designate the agricultural field edge H1a or the agricultural field edge H1c as the reference edge, the left-right direction parallel to the agricultural field edge H1a and the agricultural field edge H1c is determined as the reference edge.

Furthermore, the user taps the number input box for the headland width and then appropriately operates the plus key B45 or the minus key B46 to input a number in the number input box for the headland width. As another example, the control unit 51 may be configured or programmed to determine a recommended value for the headland width for the working vehicle 1 and the working device 2 to turn in the headland based on, for example, size information relating to the working vehicle 1 included in the vehicle information and size information relating to the working device 2 included in the device information, and display the recommended value in the number input box for the headland width. In this case, the user can change the headland width by appropriately operating the plus key B45 or the minus key B46.

When the user operates a "create route" key B14 after inputting numbers in items for working condition settings on the route creation screen D7, the control unit 51 stores the input values for the items in the internal memory and creates a travel route for the working vehicle 1 on the agricultural field map MP2. In so doing, the control unit 51 first creates work route portion(s) for the working vehicle 1 to travel to perform agricultural work using the working device 2, and then creates turn route portion(s) for the working vehicle 1 to turn.

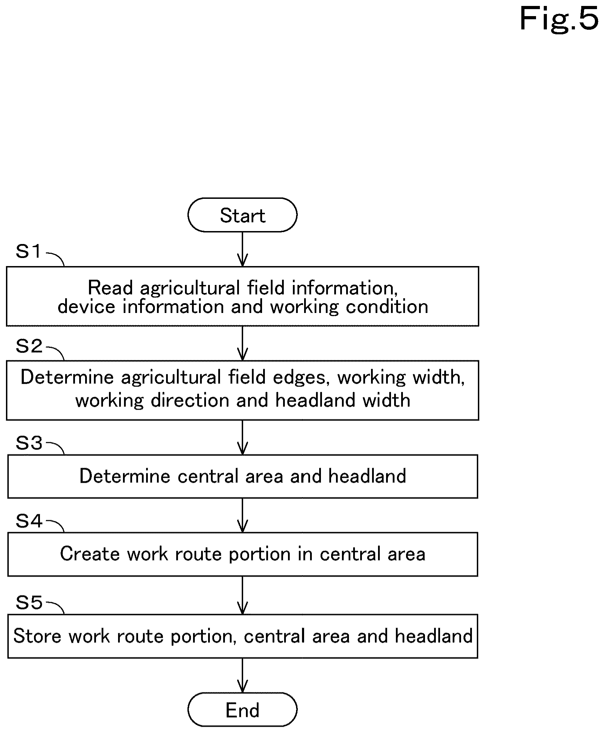

FIG. 5 is a flowchart showing a procedure of creating work route portions performed by the route creator 50. The control unit 51 performs each step shown in FIG. 5 according to software program(s) stored in the internal memory in advance.

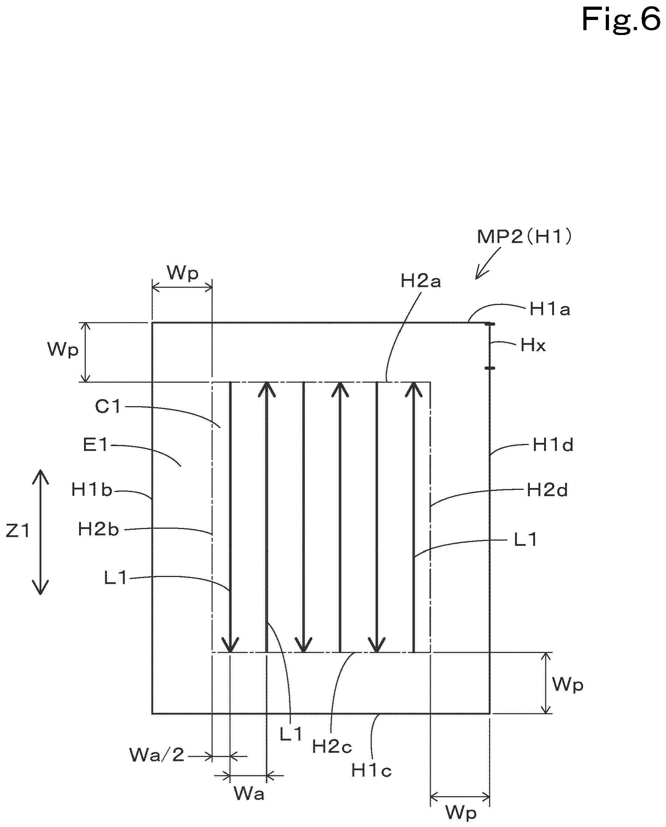

As mentioned above, when the user inputs a working condition and then operates the "route creation" key B14 on the route creation screen shown in FIG. 3A, the control unit 51 reads agricultural field information, device information relating to the working device 2, and a working condition stored in the internal memory (S1 in FIG. 5). The control unit 51, for example, determines a plurality of agricultural field edges H1a to H1d representing the outline of the agricultural field H1 shown in FIG. 6 from the agricultural information, determines the working width of the working device 2 from the device information, and determines the working direction and the headland width from the working condition (S2 in FIG. 5).

Next, as shown in FIG. 6, the control unit 51 creates shifted edges H2a to H2d parallel to the respective agricultural field edges H1a to H1d by displacing each of the plurality of agricultural field edges H1a to H1d on the agricultural field map MP2 toward the interior of the agricultural field map MP2 by the headland width Wp. The control unit 51 then determines a central area C1 enclosed by the shifted edges H2a to H2d, and determines the portion of the agricultural field map MP2 that is other than the central area C1 as the headland E1 (S3 in FIG. 5). That is, the headland E1 is enclosed by the agricultural field edges H1a to H1d and the shifted edges H2a to H2d.

Next, the control unit 51 creates a plurality of work route portions L1 in the central area C1 based on the agricultural field information, the device information, and the working condition (S4 in FIG. 5). In so doing, the control unit 51 creates a single work route portion L1, which is parallel to a working direction Z1, at the position in the central area C1 that is at a distance Wa/2 half the working width Wa from the shifted edge H2b parallel to the working direction Z1 and shifted from the reference edge H1b. The control unit 51 then creates a plurality of work route portions L1, each of which is parallel to the working direction Z1, in the central area C1 at interval(s) corresponding to the working width Wa, with reference to the single work route portion L1. The interval corresponding to the working width Wa is the interval equal to the working width Wa, the interval equivalent to the value obtained by subtracting a predetermined overlap from the working width Wa, or the like.

In the example in FIG. 6, the control unit 51 creates the plurality of work route portions L1 arranged at intervals each equal to the working width Wa. The control unit 51 creates straight work route portions L1 in the example of FIG. 6, but, instead of or in addition to this, the control unit 51 may create gently curved or bent work route portions in the central area C1. After step S4 in FIG. 5, the control unit 51 stores, in the storing unit 53, information indicating the plurality of work route portions L1, information indicating the central area C1, and information indicating the headland E1 such that these information are associated with the agricultural field map MP2 (S5 in FIG. 5).

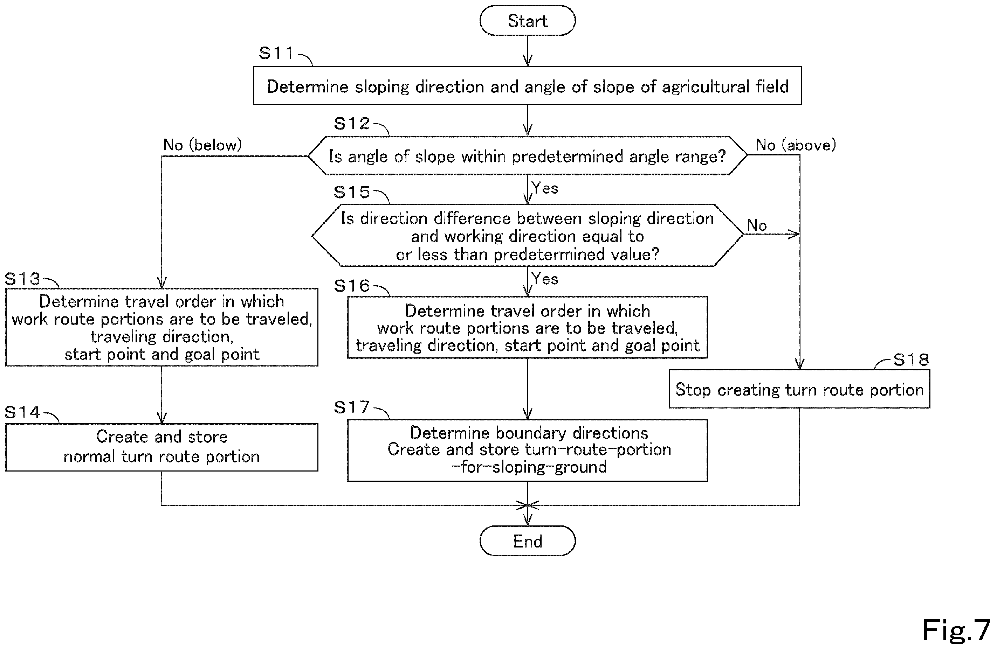

FIG. 7 is a flowchart showing a procedure of creating turn route portions performed by the route creator 50. The control unit 51 performs each step shown in FIG. 7 according to software program(s) stored in the internal memory in advance.

The control unit 51, after creating the plurality of work route portions L1 as described above, determines a sloping direction T1 and an angle of slope 01 of the agricultural field H1 from slope information relating to the agricultural field H1 included in the agricultural field information (S11 in FIG. 7). Next, the control unit 51 compares the angle of slope $\theta1$ of the agricultural field H1 and a predetermined angle range $\theta t1$ to $\theta t2$ stored in advance. The predetermined angle range $\theta t1$ to $\theta t2$ is the range of the angle of slope $\theta1$ of the sloping surface at which the working vehicle 1 can stably travel, and is set to the range from a first angle (acute angle) $\theta t1$ to a second angle (acute angle) $\theta t2$ greater than the first angle $\theta t1$ in consideration of the size, center of gravity, and/or the like of the working vehicle 1. The predetermined angle range $\theta t1$ to $\theta t2$ is preferably defined by the lower limit greater than 0° and the upper limit less than 15° ($0°< \theta t1$ to $\theta t2 < 15°$).

When the angle of slope $\theta1$ of the agricultural field H1 is below the predetermined angle range $\theta t1$ to $\theta t2$ (NO (below) at S12), the control unit 51 determines that the agricultural field H1 is a non-sloping ground (level or substantially level) not sloping or sloping at an angle below the predetermined angle range $\theta t1$ to $\theta t2$. In this case, the control unit 51 determines the travel order in which the plurality of work route portions L1 are to be traveled, the directions of travel, a start point Ps, and a goal point Pg based on, for example, the position of an entrance Hx (FIG. 8A, etc.) to the agricultural field H1 determined from the agricultural field information and the positions of the plurality of work route portions L1 (S13 in FIG. 7).

In so doing, the control unit 51 determines that one of the plurality of work route portions L1 that is closest to the entrance Hx to the agricultural field H1 is the last work route portion L1 (N-th work route portion in the case where N work route portions L1 are created) to be traveled last. The control unit 51 determines that one of the opposite ends of the last work route portion L1 that is closest to the entrance Hx to the agricultural field H1 is the goal point Pg. Furthermore, the control unit 51 determines the travel order in which the other work route portions L1 are to be traveled and the directions of travel based on the last work route portion L1 such that, for example, the shortest distance to be traveled is achieved, and determines that one end of the first work route portion L1 to be traveled first is the start point Ps.

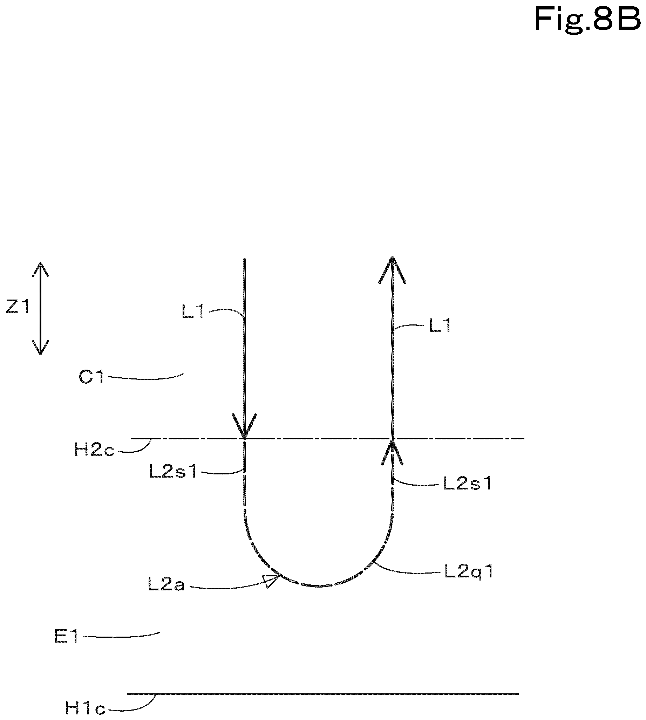

The control unit 51 then creates a predetermined normal turn route portion L2a for the working vehicle 1 to turn from one of two adjacent work route portions L1 to be traveled sequentially to the other of the two work route portions L1, in the headland E1 of the agricultural field map MP2 (S14 in FIG. 7). In so doing, for example, the control unit 51 creates, as the normal turn route portion L2a, a route portion along which the working vehicle 1 is to travel forward while being steered left or right to turn by 180° from the end point (the head of an arrow) of one of the adjacent work route portions L1 toward the starting point (the tail of an arrow) of the other of the adjacent work route portions L1 without performing a multi-point turn to change the position or orientation of the working vehicle 1 by switching the direction of travel of the working vehicle 1 (vehicle body 3) between forward and rearward (see FIGS. 8A and 8B).

As shown in FIG. 8B, the normal turn route portion L2a includes a plurality of straight portions L2s1 parallel to the working direction Z1 and a semicircular arc portion L2q1. As another example, the control unit 51 may be configured or programmed to create a normal turn route portion not including the straight portions L2s1 and only including the arc portion L2q1. The shape of the normal turn route portion is not limited to the above-described shape, and may be some other shape.

The control unit 51 creates one or more normal turn route portions L2a in the headland E1 according to the number of the work route portions L1. Specifically, in the case where N work route portions L1 are created, the control unit 51 creates N-1 normal turn route portions L2a. The control unit 51, after creating the normal turn route portion(s) L2a as described above, stores information indicating the normal turn route portion(s) L2a in the storing unit 53 such that the information is associated with the agricultural field map MP2 (S14 in FIG. 7).

When the plurality of work route portions L1 and the plurality of normal turn route portions L2a are created as described above, a continuous travel route L3 (FIG. 8A) including the plurality of work route portions L1 and the plurality of normal turn route portions L2a is created on the agricultural field map MP2. That is, the control unit 51 creates the travel route L3 including the plurality of work route portions L1 and the plurality of normal turn route portions L2a on the agricultural field map MP2 and stores information indicating the travel route L3 in the storing unit 53 such that the information is associated with the agricultural field map MP2.

On the other hand, when the angle of slope $\theta1$ of the agricultural field H1 is within the predetermined angle range $\theta t1$ to $\theta t2$ (YES at S12 in FIG. 7), the control unit 51 determines that the agricultural field H1 is a sloping ground Hs sloping at an angle within the predetermined angle range $\theta t1$ to $\theta t2$ (sloping ground on which the working vehicle 1 can stably travel). In this case, the control unit 51 calculates a direction difference $\Delta\theta$ between the sloping direction T1 of the agricultural field H1 and the working direction Z1, and compares the direction difference $\Delta\theta$ with a predetermined value (value indicating an acute angle) $\Delta\theta t$.

When the direction difference $\Delta\theta$ between the sloping direction T1 of the agricultural field H1 and the working direction Z1 is equal to or less than the predetermined value $\Delta\theta t$ (YES at S15), the control unit 51 determines the travel order in which the plurality of work route portions L1 are to be traveled, the directions of travel, the start point Ps and the goal point Pg based on, for example, the position of the entrance Hx to the agricultural field H1, the positions of the plurality of work route portions L1, and the slope information (sloping direction T1 and angle of slope $\theta1$) relating to the agricultural field H1 (S16). The control unit 51 then determines one of boundary directions T2 by rotating the sloping direction T1 by a predetermined angle $\theta2$ leftward relative to the sloping direction T1 and the other of the boundary directions T2 by rotating the sloping direction T1 by the predetermined angle 02 rightward relative to the sloping direction T1, and creates, in the headland E1 of the agricultural field map MP2, a turn-route-portion-for-sloping-ground L2b for the working vehicle 1 to turn from one of two adjacent work route portions L1 to be traveled sequentially to the other of the two adjacent work route portions L1 (S17).

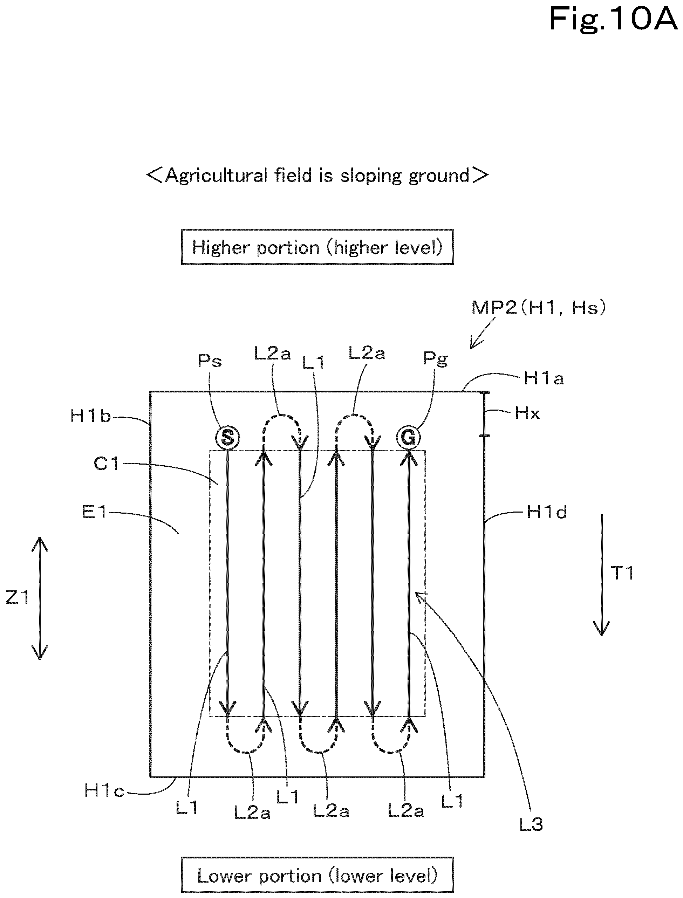

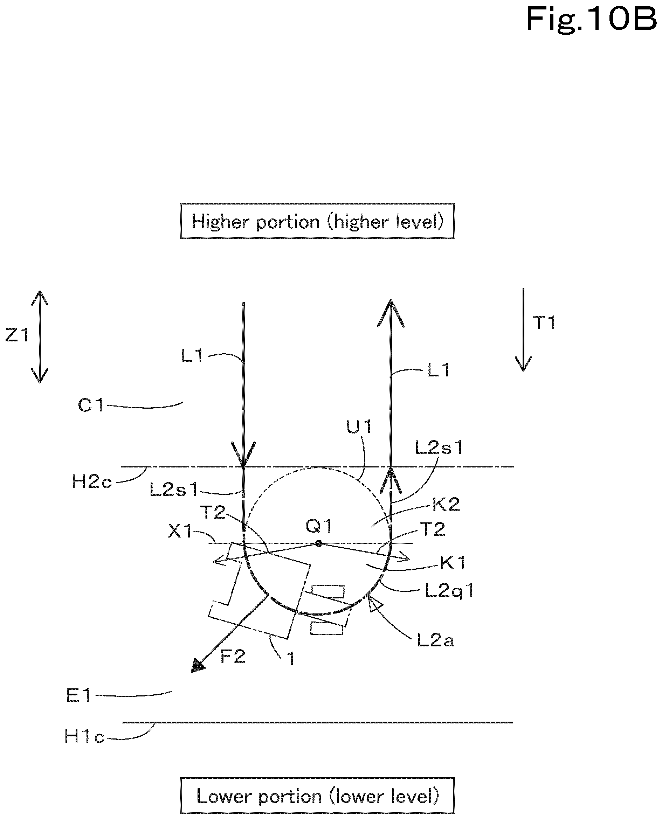

For example, as shown in FIGS. 9A and 10A, when the sloping direction T1 of the agricultural field H1 which is the sloping ground Hs and the working direction Z1 are parallel to each other, the direction difference $\Delta\theta$ between the sloping direction T1 and the working direction Z1 is 0° ($\Delta\theta = 0°$). In this case, for example, if normal turn route portions L2a are created in the headland E1 according to the number of work route portions L1 as shown in FIG. 10A, most of the arc portion L2q1 of each of the normal turn route portions L2a that are positioned lower than the other normal turn route portions L2a in the sloping direction T1 is located within a prohibiting zone K1 (which is lower than the boundary directions T2 each extending from the center Q1 of an imaginary circle U1 including the arc portion L2q1) (see FIG. 10B). Thus, when the working vehicle 1 turns along a normal turn route portion L2a located in a lower portion of the headland E1 in the sloping direction T1, the centrifugal force F2 toward the prohibiting zone K1 (downward (toward a lower level) along the sloping ground Hs) may act on the working vehicle 1 and the working vehicle 1 may overturn.

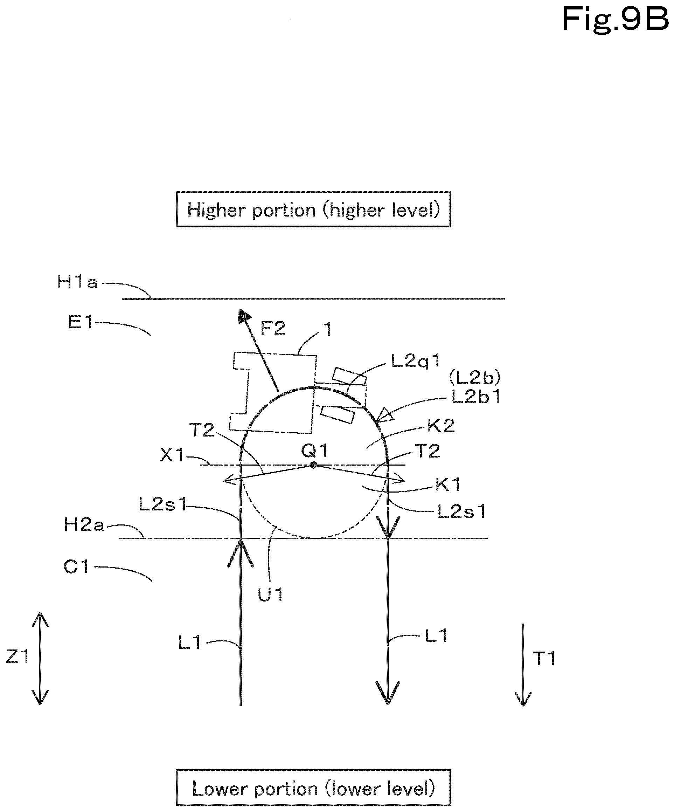

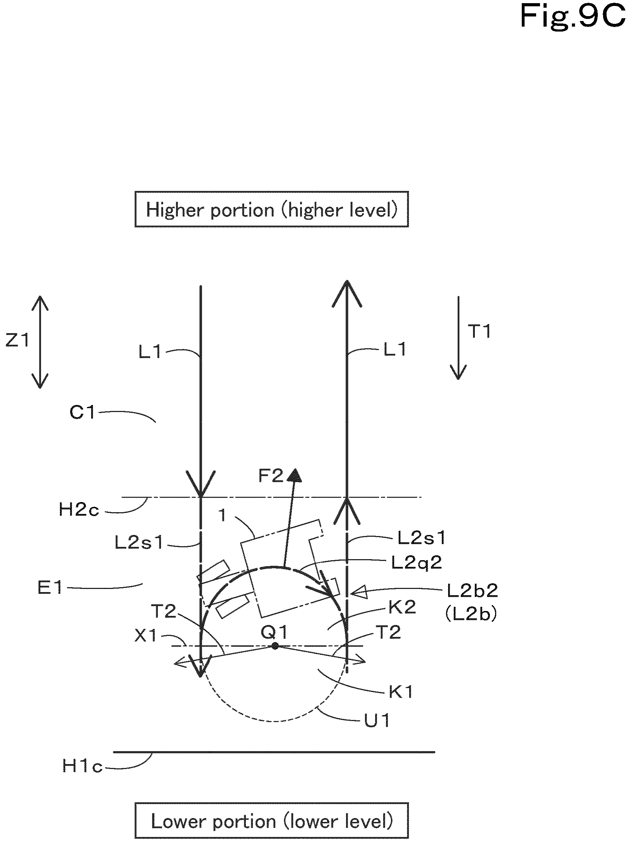

However, when the sloping direction T1 of the agricultural field H1 which is the sloping ground Hs and the working direction Z1 are parallel to each other, the control unit 51, at step S17 in FIG. 7, first determines the boundary directions T2 as shown in FIGS. 9B and 9C, and then determines a limiting zone K2 and a prohibiting zone K1. After that, the control unit 51, as shown in FIGS. 9A to 9C, creates a turn-route-portion-for-sloping-ground L2b (L2b1, L2b2) in the headland E1 such that the centrifugal force F2 toward the prohibiting zone K1 (downward (toward a lower level) along the sloping ground Hs) does not act on the working vehicle 1 and only the centrifugal force F2 toward the limiting zone K2 (upward (toward a higher level) along the sloping ground Hs) acts on the working vehicle 1. In so doing, the control unit 51 creates one or more turn-route-portions-for-sloping-ground L2b (L2b1, L2b2) in the headland E1 according to the number of the work route portions L1.

In the examples shown in FIGS. 9A to 9C, the control unit 51 creates, in an upper portion of the headland E1 in the sloping direction T1 of the agricultural field H1 as in FIG. 9A, turn-route-portion(s)-for-sloping-ground L2b1 along which the working vehicle 1 is to travel forward while being steered left or right to turn by 180° from the end point of one of the adjacent work route portions L1 toward the starting point of the other of the adjacent work route portions L1 (see FIG. 9B). That is, the turn-route-portion-for-sloping-ground L2b1 is a turn route portion for the working vehicle 1 to turn without having to switch the direction of travel. The turn-route-portion-for-sloping-ground L2b1 includes a semicircular turn route portion curved such that the curve is convex upward along the sloping direction T1 of the agricultural field H1, and substantially identical to the normal turn route portion L2a shown in FIGS. 8A and the like.

The control unit 51 creates, in a lower portion of the headland E1 in the sloping direction T1 of the agricultural field H1 as in FIG. 9A, turn-route-portion(s)-for-sloping-ground L2b2 along which the working vehicle 1 is to travel forward from the end point of one of the adjacent work route portions L1, travel rearward while being steered left or right to turn by 180°, and travel forward toward the starting point of the other of the adjacent work route portions L1 (see FIG. 9C). That is, the turn-route-portion-for-sloping-ground L2b2 is a turn route portion for the working vehicle 1 to turn by switching the direction of travel multiple times. (Turn-route-portions-for-sloping-ground L2b3 to L2b7 described later are also each a turn route portion for the working vehicle 1 to turn by switching the direction of travel.) The turn-route-portion-for-sloping-ground L2b2 is a reversed M-shaped (also referred to "fish tail shaped") turn route portion including a semicircular arc portion L2q2 curved such that the curve is convex upward in the sloping direction T1 of the agricultural field H1. The central angle of the arc portion L2q2 is 180°.

On the agricultural field map MP2, the control unit 51 creates each turn-route-portion-for-sloping-ground L2b2 such that the arc portion L2q2 included in the turn-route-portion-for-sloping-ground L2b2 is not positioned within the prohibiting zone K1 lower than the boundary directions T2 extending from the center Q1 of the imaginary circle U1 which includes the arc portion L2q2, but is positioned within the limiting zone K2 extending upward from the boundary directions T2. The turn-route-portion-for-sloping-ground L2b1 shown in FIG. 9B is similarly created such that the arc portion L2q1 is not positioned within the prohibiting zone K1, but positioned within the limiting zone K2.

When the working vehicle 1 turns along each of the turn-route-portions-for-sloping-ground L2b1 and L2b2 created as described above in the agricultural field H1 which is the sloping ground Hs, the centrifugal force F2 toward the prohibiting zone K1 does not act on the working vehicle 1 and only the centrifugal force F2 toward the limiting zone K2 acts on the working vehicle 1, making it possible to eliminate or reduce the likelihood that the working vehicle 1 will overturn.

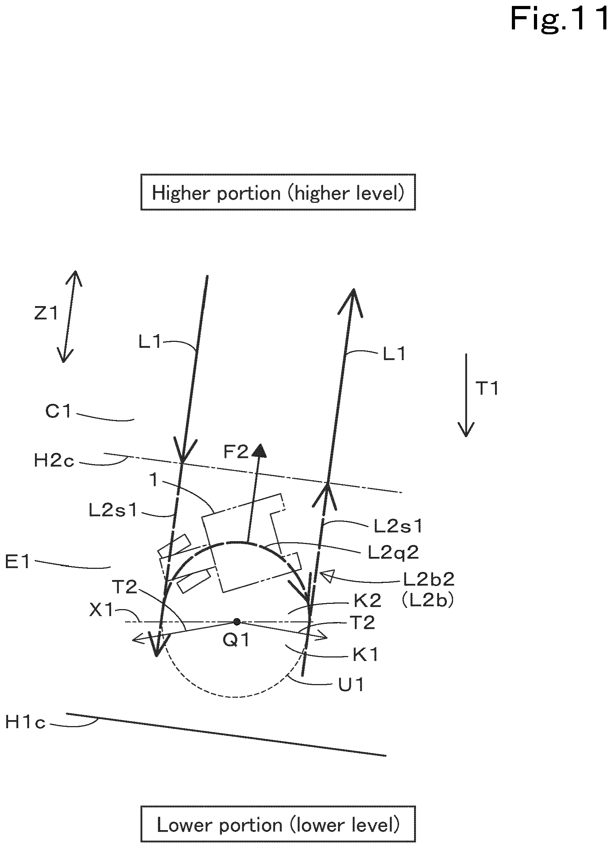

Also in the case where the working direction Z1 is at an angle to the sloping direction T1 of the agricultural field H1 and the direction difference $\Delta\theta$ between the sloping direction T1 and the working direction Z1 is greater than 0° and equal to or less than the predetermined value $\Delta\theta t$ as shown in FIG. 11, similar to the examples shown in FIGS. 9A to 9C, the control unit 51 creates one or more turn-route-portions-for-sloping-ground L2b (L2b1, L2b2) in the headland E1 according to the number of the work route portions L1. FIG. 11 shows the turn-route-portion-for-sloping-ground L2b2 as a representative example. The control unit 51 stores information indicating the created turn-route-portion-for-sloping-ground L2b in the storing unit 53 such that the information is associated with the agricultural field map MP2 (S17 in FIG. 7).

When the plurality of work route portions L1 and the plurality of turn-route-portions-for-sloping-ground L2b are created on the agricultural field map MP2 as described above, a continuous travel route L3 (FIG. 9A) including the plurality of work route portions L1 and the plurality of turn-route-portions-for-sloping-ground L2b (and the normal turn route portion L2a in some cases) is created on the agricultural field map MP2. That is, the control unit 51 creates the travel route L3 including the plurality of work route portions L1 and the plurality of turn-route-portions-for-sloping-ground L2b on the agricultural field map MP2 and stores information indicating the travel route L3 in the storing unit 53 such that the information is associated with the agricultural field map MP2.

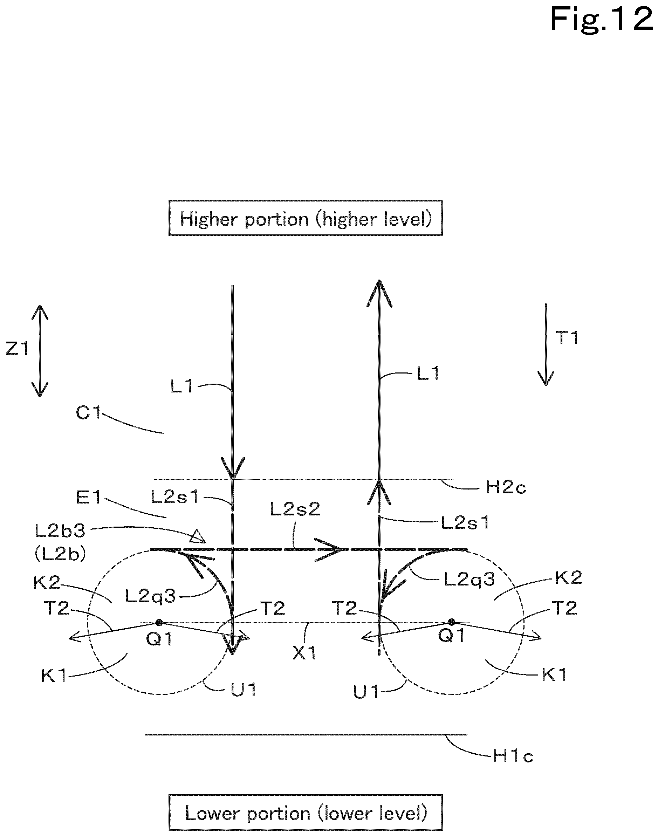

Although the example in FIG. 9B shows the semicircular turn-route-portion-for-sloping-ground L2b1 and the examples in FIGS. 9C and 11 show the reversed M-shaped turn-route-portion-for-sloping-ground L2b2, the shape of the turn-route-portion-for-sloping-ground L2b is not limited to the above shapes. Additionally or alternatively, the control unit 51 may be configured or programmed to, for example, as shown in FIG. 12, create a turn-route-portion-for-sloping-ground L2b3 that projects outward relative to each of adjacent work route portions L1 to be traveled sequentially, or a turn-route-portion-for-sloping-ground L2b having some other shape.

The turn-route-portion-for-sloping-ground L2b3 shown in FIG. 12 includes a plurality of arc portions L2q3 each defining a sector and straight portions L2s1 and L2s2. The central angle of each arc portion L2q3 is 90°. The control unit 51 creates the turn-route-portion-for-sloping-ground L2b3 such that the straight portions L2s1 are parallel to the working direction Z1, the straight portion L2s2 is perpendicular to the working direction Z1, and the arc portions L2q3 are not positioned within the prohibiting zone K1 but positioned within the limiting zone K2.

When the working vehicle 1 turns along such a turn-route-portion-for-sloping-ground L2b3, the working vehicle 1 first travels straight forward along one of the straight portions L2s1 from the end point of one of the adjacent work route portions L1, and then travels rearward along one of the arc portions L2q2 while being steered left or right to turn by 90°. After that, the working vehicle 1 travels forward along the straight portion L2s2 perpendicular to the work route portions L1, travels rearward along the other of the arc portions L2q2 while being steered left or right to turn by 90°, and then travels forward along the other of the straight portions L2s1 toward the starting point of the other of the adjacent work route portions L1.

After step S11 in FIG. 7, when the angle of slope θ1 of the agricultural field H1 is above the predetermined angle range θt1 to θt2 (NO (above) at S12 in FIG. 7), the control unit 51 determines that the agricultural field H1 is a steeply sloping ground sloping at an angle above the predetermined angle range θt1 to θt2. In this case, the control unit 51 stops creating turn route portions (S18). The control unit 51 also stops creating a travel route on the agricultural field map MP2.

After stopping creating turn route portions as described above, the control unit 51 may delete, from the storing unit 53, the information indicating the plurality of work route portions L1, the central area C1 and the headland E1 already created on the agricultural field map MP2. The control unit 51 may cause the display operation interface 52 to display (output) a notification indicating that the control unit 51 stopped creating at least one of the turn route portions or the travel route or that at least one of the turning or travel of the working vehicle 1 in the agricultural field H1 is prohibited, because the agricultural field H1 corresponding to the agricultural field map MP2 is a steeply sloping ground.

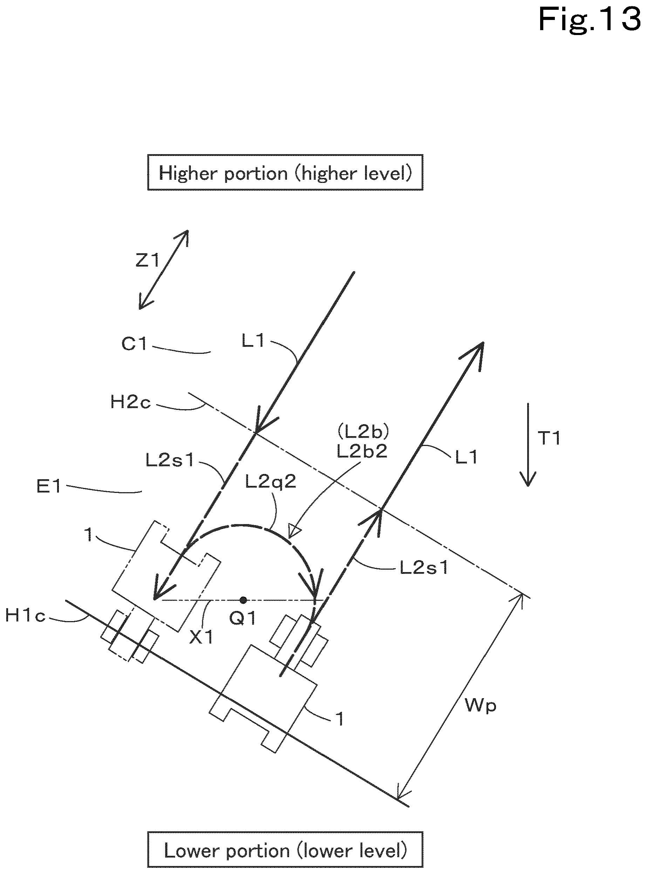

Even if the angle of slope θ1 of the agricultural field H1 is within the predetermined angle range θt1 to θt2 (YES at S12), there may be cases in which the direction difference Δθ between the sloping direction T1 of the agricultural field H1 and the working direction Z1 is above the predetermined value Δθt (NO at S15). In this case, for example, if the headland width Wp is small as shown in FIG. 13, even when a turn-route-portion-for-sloping-ground L2b2 (L2b) is created, the working vehicle 1 may stick out of the headland E1 and out of the agricultural field H1 when the working vehicle 1 turns along the turn-route-portion-for-sloping-ground L2b2. The control unit 51 stops creating turn route portions to eliminate or reduce the likelihood of such cases (S18 in FIG. 7). Also in this case, the control unit 51 also stops creating the travel route on the agricultural field map MP2. When the control unit 51 stops creating the turn route portions and the travel route as such, the control unit 51 may cause the display operation interface 52 to output (display) a notification indicating that the travel route L3 is not created, and may cause a speaker included in the route creator 50 or the working vehicle 1 to output (via sound, etc.) a notification indicating that the travel route L3 is not created.

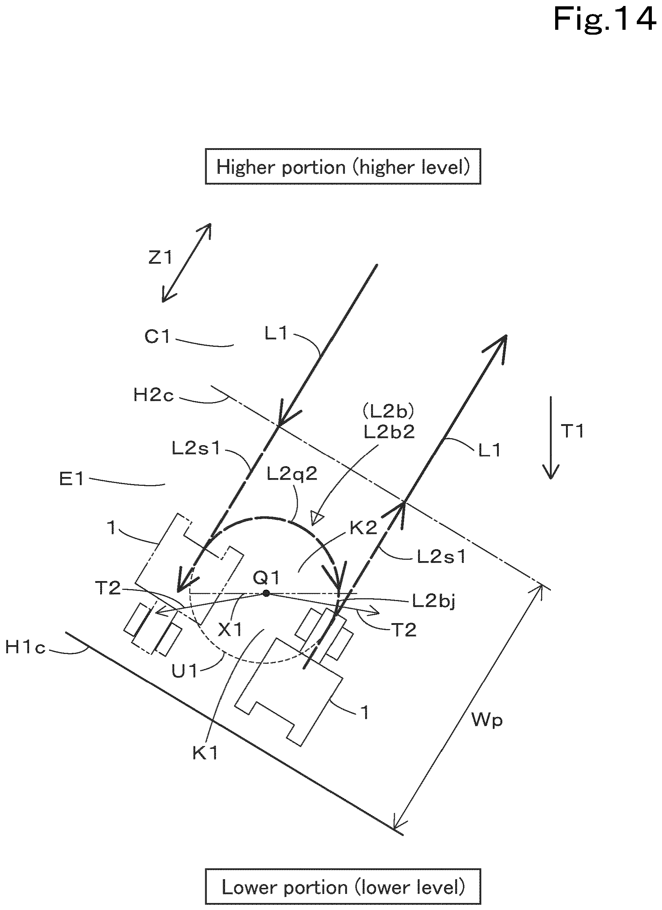

As another example, the control unit 51 may be configured or programmed to, when the direction difference Δθ between the sloping direction T1 of the agricultural field H1 which is the sloping ground Hs and the working direction Z1 is above the predetermined value Δθt (NO at S15), determine the travel order in which the plurality of work route portions L1 are to be traveled, the directions of travel, the start point Ps and the goal point Pg and provisionally create turn-route-portion(s)-for-sloping-ground L2b2 (L2b) in the headland E1. The control unit 51 may be configured or programmed to then determine, for example, based on the headland width Wp and the size information relating to the working vehicle 1, that the working vehicle 1 does not stick out of the headland E1 and out of the agricultural field H1 even if the working vehicle 1 turns along the provisionally created turn-route-portion-for-sloping-ground L2b2 because the headland width Wp is wide as shown in FIG. 14. The control unit 51 may be configured or programmed to, upon determining such, determine the provisionally created turn-route-portion-for-sloping-ground L2b2 as being a definitive turn-route-portion-for-sloping-ground L2b2 and store it in the storing unit 53. On the other hand, the control unit 51 may be configured or programmed to, when the control unit 51 determines that the working vehicle 1 sticks out of the headland E1 and out of the agricultural field H1 if the working vehicle 1 turns along the provisionally created turn-route-portion-for-sloping-ground L2b2 because the headland width Wp is narrow, delete the provisionally turn-route-portion-for-sloping-ground L2b without determining the provisionally turn-route-portion-for-sloping-ground L2b as being a definitive turn route portion (stop creating turn route portions and travel route).

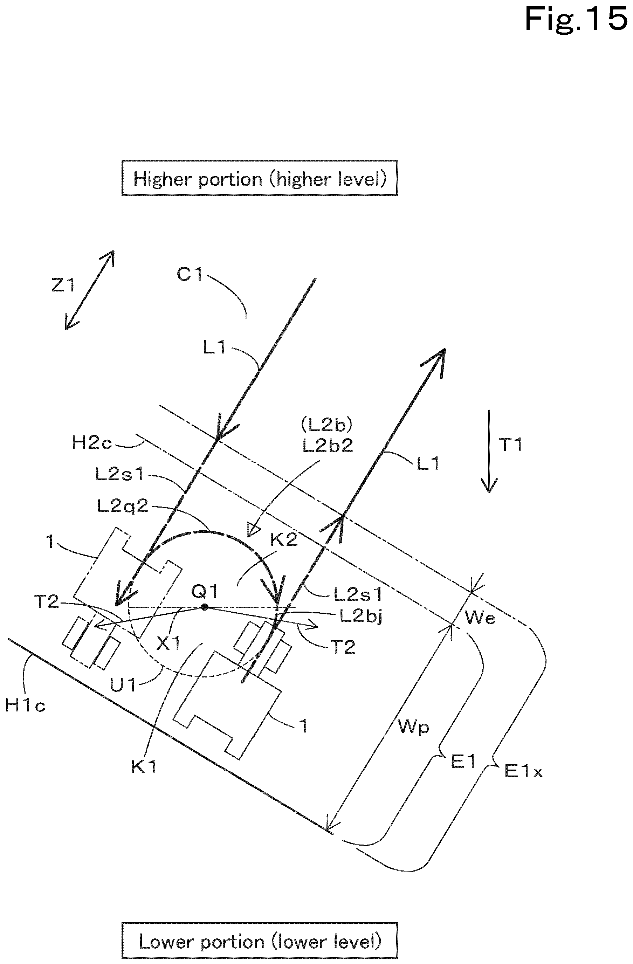

For example, the control unit 51 may cause the display operation interface 52 to display, on the route creation screen D7 , an "automatic expansion" key (not shown) to receive input of an instruction to allow or prohibit the automatic expansion of the headland width Wp. Assume that the user inputs an instruction to allow the automatic expansion of the headland width Wp by operating the "automatic expansion" key, and the control unit 51 determines that the working vehicle 1 sticks out of the headland E1 and out of the agricultural field H1 when the working vehicle 1 turns along the provisionally created turn-route-portion-for-sloping-ground L2b2. In this case, the control unit 51 may, for example, as shown in FIG. 15, expand the headland width Wp toward the interior of the agricultural field map MP2 (central area C1) by a predetermined width We, and create a turn-route-portion-for-sloping-ground L2b2 such that the turn-route-portion-for-sloping-ground L2b2 is contained within the expanded headland E1x. It is noted that the control unit 51, when automatically expanding the headland width Wp as described above, changes the central area C1 to be smaller and shorten the plurality of work route portions L1 according to the expanded width (predetermined width) We.

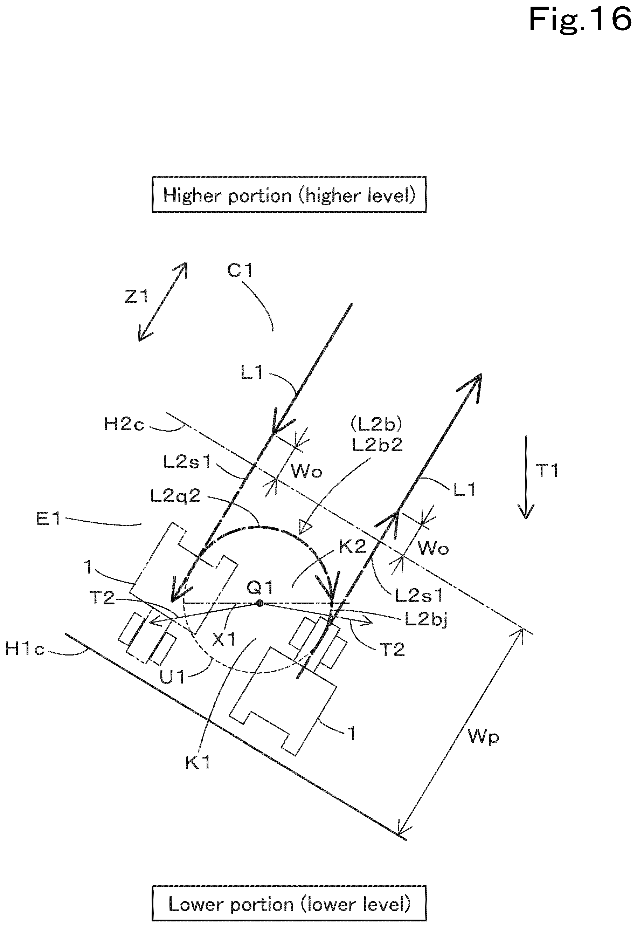

The control unit 51 may be configured or programmed to determine whether the working vehicle 1 is allowed to enter or is prohibited from entering the central area C1 when the working vehicle 1 turns, based on, for example, the category of agricultural work performed by the working device 2 or input information input by the user. The control unit 51 determines, for example, that the working vehicle 1 is allowed to enter the central area C1 when the working vehicle 1 turns, based on the fact that the agricultural work is of a predetermined category such as spreading or stubble cultivation or based on the input information input from the user, and determines that the working vehicle 1 sticks out of the headland E1 and out of the agricultural field H1 when the working vehicle 1 turns along the provisionally created turn-route-portion-for-sloping-ground L2b. In such a case, for example, as shown in FIG. 16, the control unit 51 may create the turn-route-portion-for-sloping-ground L2b2 extending in both the headland E1 and the central area C1. In the example shown in FIG. 16, the arc portion L2q2 of the turn-route-portion-for-sloping-ground L2b is created in the headland E1, and the straight portions L2s1 are created to extend in both the headland E1 and the central area C1. That is, a portion of each straight portion L2s1 extends from the headland E1 into the central area C1 by a predetermined length Wo.

In the case where the working direction Z1 is at an angle to the sloping direction T1 of the agricultural field H1, when the direction difference $\Delta\theta$ between the sloping direction T1 and the working direction Z1 is equal to or less than a constant value $\Delta\theta t1$ which is less than the predetermined value $\Delta\theta t$ as shown in FIG. 11, the control unit 51 creates the turn-route-portion-for-sloping-ground L2b2 such that the arc portion L2q2 extends from a line X1 equal in height to the center Q1 and is positioned higher than the center Q1 in the sloping direction T1.

On the other hand, when the direction difference $\Delta\theta$ between the sloping direction T1 and the working direction Z1 is above the constant value $\Delta\theta t1$ as shown in, for example, FIG. 14, the control unit 51 creates the turn-route-portion-for-sloping-ground L2b2 such that a lower end portion (a portion) of the arc portion L2q2 is positioned lower than the center Q1 in the sloping direction T1 but is positioned higher than the boundary directions T2. That is, the control unit 51 creates the turn-route-portions-for-sloping-ground L2b2 such that the arc portion L2q2 is within the limiting zone K2 (see also FIGS. 13, 15 and 16).

As described earlier, the control unit 51 changes the predetermined angle $\theta2$ (FIG. 2C) based on which the boundary directions T2, the limiting zone K2 and the like are determined, according to at least one of the sloping direction T1 or the angle of slope $\theta1$ of the agricultural field H1 which is the sloping ground Hs. Specifically, for example, the control unit 51 reduces the predetermined angle $\theta2$ as the angle of slope $\theta1$ increases. The control unit 51 reduces the predetermined angle $\theta2$ as the direction difference $\Delta\theta$ between the sloping direction T1 and the working direction Z1 increases.

As the predetermined angle $\theta2$ decreases, the boundary directions T2 rotate downward in the sloping direction T1, the limiting zone K2 spreads downward in the sloping direction T1, and the centrifugal force F2 is likely to act on the working vehicle 1 downward in the sloping direction T1. In this regard, when the angle of slope $\theta1$ is above the predetermined angle range $\theta t1$ to $\theta t2$ (NO (above) at S12 in FIG. 7) and when the direction difference $\Delta\theta$ between the sloping direction T1 and the working direction Z1 is above the predetermined value $\Delta\theta t$ (NO at S15), the control unit 51 stops creating turn route portions (S18). Thus, a turn route portion in which the centrifugal force F2 acts to cause the working vehicle 1 to overturn is not to be created on the agricultural field map MP2.

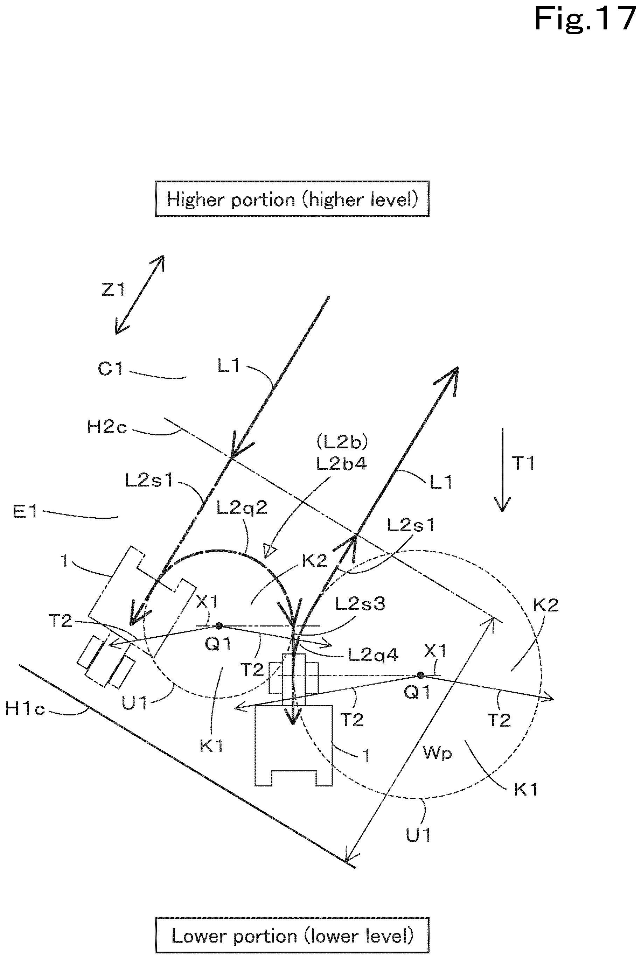

As another example, the control unit 51 may be configured or programmed to, when the direction difference $\Delta\theta$ between the sloping direction T1 and the working direction Z1 is above the constant value $\Delta\theta t1$, for example, create a turn-route-portion-for-sloping-ground L2b4 as shown in FIG. 17. The turn-route-portion-for-sloping-ground L2b4 includes arc portions L2q2, L2q4 and straight portions L2s1, L2s3. Each of the arc portions L2q2, L2q4 extends from a line X1 equal in height to the corresponding center Q1 and is positioned higher than the center Q1 in the sloping direction T1.

When the working vehicle 1 turns along the turn-route-portion-for-sloping-ground L2b4, the working vehicle 1 travels first straight forward along one of the straight portions L2s1 from the end point of one of the work route portions L1, travels rearward along the arc portion L2q2 while being steered left or right to turn by about 120°, and then travels rearward along the straight portion L2s3. After that, the working vehicle 1 travels forward along the arc portion L2q4 while being steered left or right to turn by about 20°, and travels forward along the other of the straight portions L2s1 toward the starting point of the other of the work route portions L1. Thus, the centrifugal force F2 does not act on the working vehicle 1 downward in the sloping direction T1, but the centrifugal force F2 acts on the working vehicle 1 upward in the sloping direction T1.

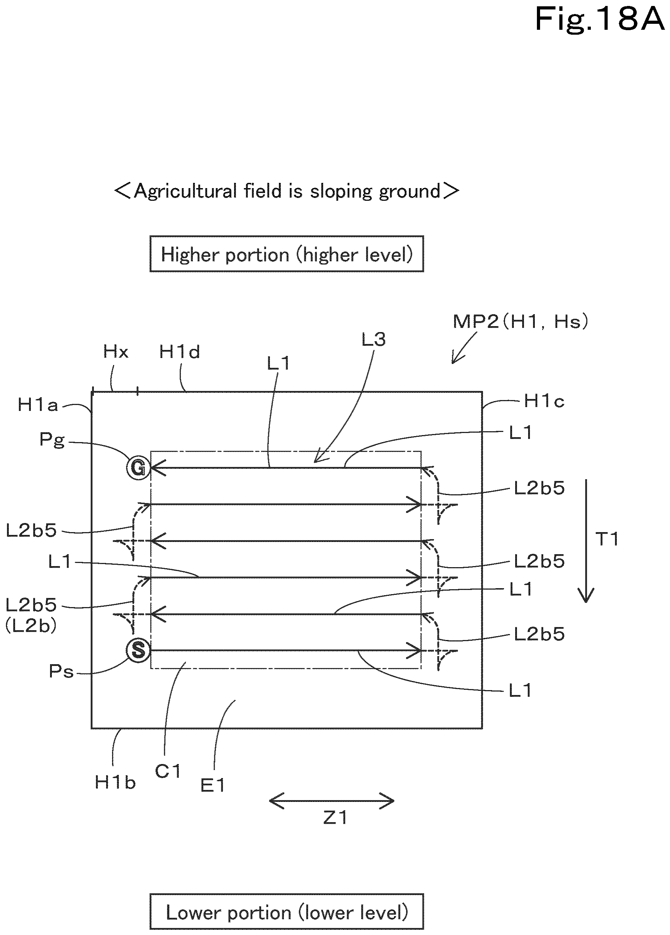

For example, as shown in FIG. 18A, there may be cases where the sloping direction T1 of the agricultural field H1 which is the sloping ground Hs and the working direction Z1 are perpendicular to each other. That is, the direction difference $\Delta\theta$ between the sloping direction T1 and the working direction Z1 is 90°, which is above the predetermined value $\Delta\theta t$. In this case, the control unit 51 may be configured or programmed to, after creating the plurality of work route portions L1 in the central area C1, determine the travel order in which the plurality of work route portions L1 are to be traveled, the directions of travel, the start point Ps and the goal point Pg such that agricultural work is performed by the working device 2 in the order of lower portions to higher portions in the sloping direction T1 of the agricultural field H1, based at least on the sloping direction T1 and the angle of slope $\theta1$ of the agricultural field H1.

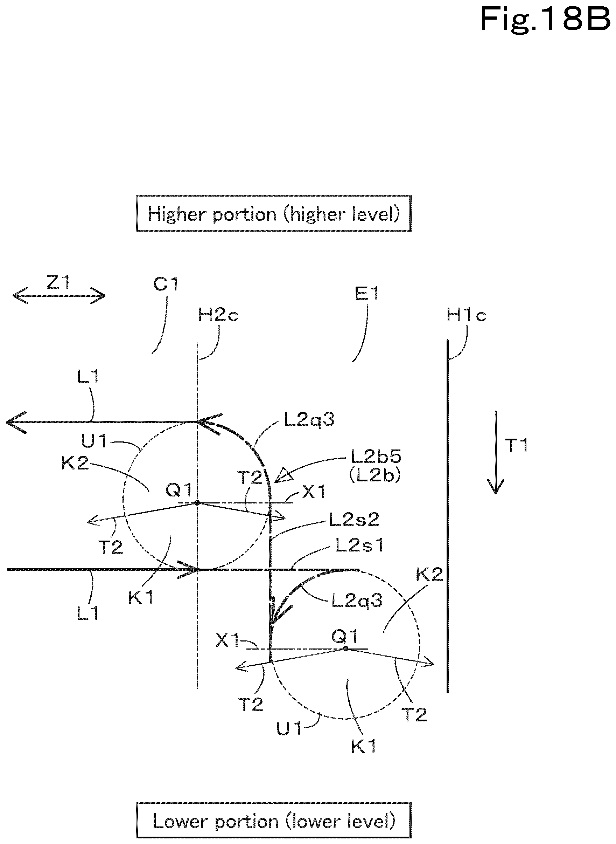

The control unit 51 may be configured or programmed to provisionally create turn-route-portion(s)-for-sloping-ground L2b5 in the headland E1 according to, for example, the travel order in which the plurality of work route portions L1 are to be traveled. The control unit 51 may be configured or programmed to then, when the headland width Wp is large and the provisionally created turn-route-portion-for-sloping-ground L2b5 creased as shown in FIGS. 18A and 18B does not stick out of the headland E1, determine the provisionally created turn-route-portion-for-sloping-ground L2b5 as being a definitive turn-route-portion-for-sloping-ground L2b5 and store the turn-route-portion-for-sloping-ground L2b5 in the storing unit 53. The turn-route-portion-for-sloping-ground L2b5 also includes a plurality of arc portions L2q3 and straight portions L2s1, L2s2.

When the working vehicle 1 turns along such a turn-route-portion-for-sloping-ground L2b5, the working vehicle 1 first travels straight forward along one of the straight portions L2s1 from the end point of one of the work route portions L1, and then travels rearward along one of the arc portions L2q3 while being steered left or right to turn by 90° downward in the sloping direction T1 of the agricultural field H1. After that, the working vehicle 1 travels forward along the straight portion L2s2 upward in the sloping direction T1, and travels forward along the other of the arc portions L2q3 while being steered left or right to turn by 90° toward the starting point of the other of the work route portions L1.

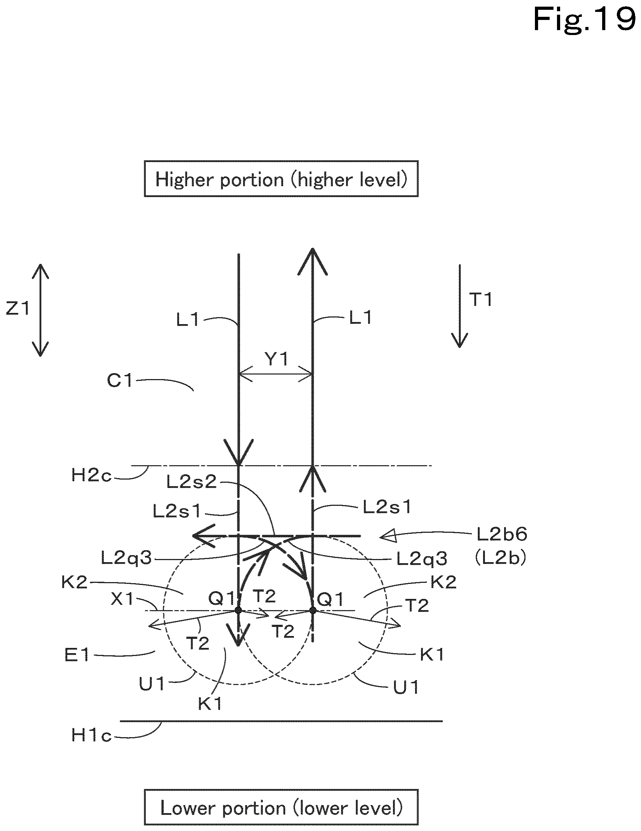

The control unit 51 may be configured or programmed to create the turn-route-portion-for-sloping-ground L2b according to the slope information relating to the agricultural field H1 which is the sloping ground Hs and intervals between the plurality of work route portions L1. For example, the control unit 51 compares the interval Y1 between the plurality of work route portions L1 shown in FIG. 19, etc. with a predetermined interval Yt. The predetermined interval Yt may be, for example, twice as large as the smallest turning radius of the working vehicle 1.

For example, as shown in FIG. 9A, in the case where the sloping direction T1 of the agricultural field H1 and the working direction Z1 are parallel to each other (direction difference $\Delta\theta$ = 0°), the control unit 51, when the interval Y1 between the plurality of work route portions L1 is smaller (narrower) than the predetermined interval Yt as shown in FIG. 19, creates a turn-route-portion-for-sloping-ground L2b6 projecting outward relative to each of a plurality of work route portions L1. The turn-route-portion-for-sloping-ground L2b6 also includes a plurality of arc portions L2q3 and straight portions L2s 1, L2s2. Each of the arc portions L2q3 of the turn-route-portion-for-sloping-ground L2b6 extends outward from the interior of the area between adjacent work route portions L1 to be traveled sequentially. When the interval Y1 between the plurality of work route portions L1 is greater (wider) than the predetermined interval Yt, as shown in FIG. 9C, the control unit 51 creates a turn-route-portion-for-sloping-ground L2b2 which is within the area between the plurality of work route portions L1 and is curved such that the curve is convex upward in the sloping direction T1.

When the working vehicle 1 turns along the turn-route-portion-for-sloping-ground L2b6 shown in FIG. 19, the working vehicle 1 first travels straight forward along one of the straight portions L2s1 from the end point of one of the work route portions L1, and travels rearward along one of the arc portions L2q3 while being steered left or right to turn by 90° upward in the sloping direction T1 of the agricultural field H1. After that, the working vehicle 1 travels forward along the straight portion L2s2 perpendicular to the working direction Z1, travels rearward along the other of the arc portions L2q3 while being steered left or right to turn by 90° downward in the sloping direction T1 of the agricultural field H1, and then travels forward along the other of the straight portions L2s1 toward the starting point of the other of the work route portions L1.

As another example, the control unit 51 may be configured or programmed to, when the sloping direction T1 of the agricultural field H1 and the working direction Z1 are parallel to each other, create the turn-route-portion-for-sloping-ground L2b3 as shown in FIG. 12. The control unit 51 may be configured or programmed to determine the length of the straight portion L2s2 of the turn-route-portion-for-sloping-ground L2b3 that is perpendicular to the work route portions L1 according to the interval Y1 between the plurality of work route portions L1. Specifically, the control unit 51 increases the length of the straight portion L2s2 as the interval Y1 between the plurality of work route portions L1 increases.

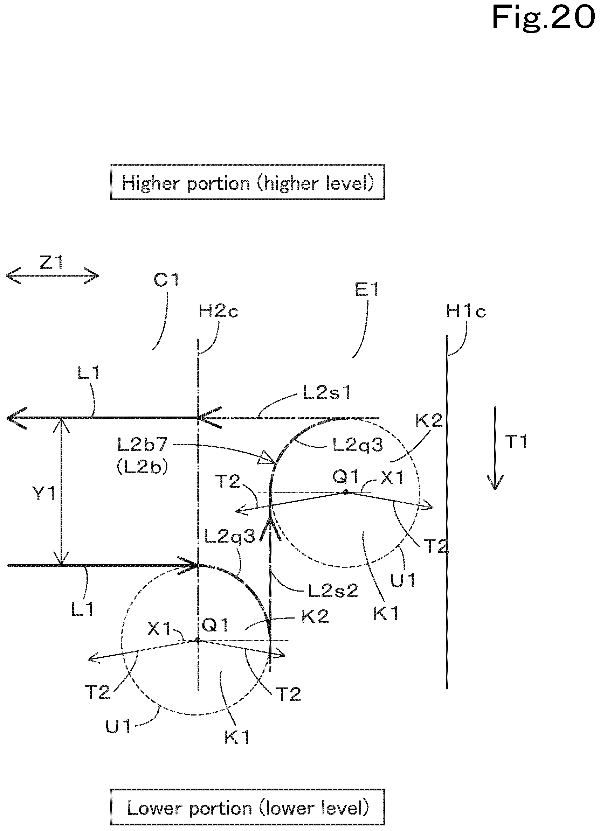

The control unit 51 may be configured or programmed to, for example, as shown in FIG. 18A, etc., when the sloping direction T1 of the agricultural field H1 and the working direction Z1 are perpendicular to each other (direction

difference $\Delta\theta = 90°$), create a turn-route-portion-for-sloping-ground L2b7 projecting outward relative to a plurality of work route portions L1 as shown in FIG. 20. The turn-route-portion-for-sloping-ground L2b7 includes a plurality of arc portions L2q3 and straight portions L2s1, L2s2. The control unit 51 may be configured or programmed to determine the length of the straight portion L2s2 of such a turn-route-portion-for-sloping-ground L2b7 that is perpendicular to the work route portions L1 according to the interval Y1 between the plurality of work route portions L1. Also in this case, the control unit 51 increases the length of the straight portion L2s2 as the interval Y1 between the plurality of work route portions L1 increases.

When the working vehicle 1 turns along the turn-route-portion-for-sloping-ground L2b7 shown in FIG. 20, the working vehicle 1 first travels forward along one of the arc portions L2q3 from the end point of one of the work route portions L1 while being steered left or right to turn by 90° downward in the sloping direction T1 of the agricultural field H1, and then travels straight rearward along the straight portion L2s2. After that, the working vehicle 1 travels rearward along the other of the arc portions L2s2 while being steered left or right to turn by 90°, and then travels forward along the straight portion L2s1 toward the starting point of the other of the work route portions L1.

Also with regard to the turn-route-portions-for-sloping-ground L2b3, L2b5 shown in FIGS. 12, 18 and the like, the control unit 51 may determine the length of the straight portion L2s2 perpendicular to the work route portions L1 according to the interval Y1 between the plurality of work route portions L1. Also in this case, the control unit 51 increases the length of the straight portion L2s2 as the interval between the plurality of work route portions L1 increases.

The control unit 51 may also be configured or programmed to, in the case where the sloping direction T1 of the agricultural field H1 is at an angle to the working direction Z1, when creating a turn-route-portion-for-sloping-ground L2b (L2b3, L2b5 to L2b7) including a straight portion L2s2 perpendicular to the work route portions L1 (and the working direction Z1), determine the length of the straight portions L2s2 according to the interval Y1 between the plurality of work route portions L1 (not shown).

The storing unit 53 may store, in advance, a plurality of types (plurality of shapes) of patterns for the working vehicle 1 to turn, such as those examples shown in FIGS. 9A to 9C and FIGS. 11 to 20. The control unit 51 may be configured or programmed to select an appropriate one of the plurality of types of turning patterns from the storing unit 53 based on the slope information (sloping direction T1, angle of slope $\theta1$) relating to the agricultural field H1, the positions (including the interval Y1) of the plurality of work route portions L1, the headland width Wp, and/or the like, and then create a turn-route-portion-for-sloping-ground L2b (turn-route-portion-for-sloping-ground L2b1 to L2b7) using the selected turning pattern.

The above-described example embodiments discuss examples in which the entire agricultural field H1 is the sloping ground Hs. Note, however, that, additionally or alternatively, the control unit 51 may be configured or programmed to, when an agricultural field H1 includes both the sloping ground Hs and the non-sloping ground, create turn-route-portion(s)-for-sloping-ground L2b on the sloping ground and create normal turn route portion(s) L2a on the non-sloping ground, of the agricultural field map MP2 indicating the agricultural field H1.

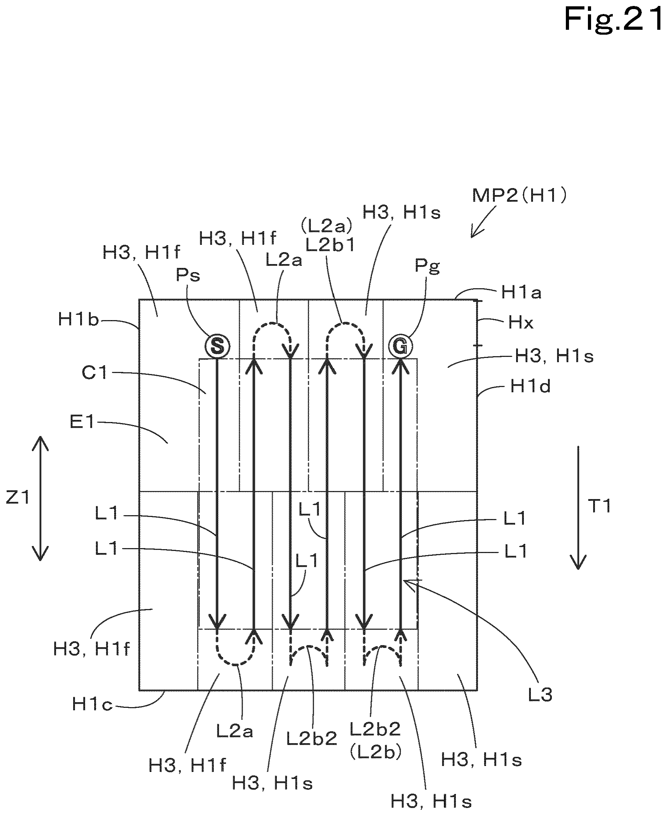

Specifically, for example, as shown in FIG. 21, the control unit 51 divides the agricultural field map MP2 into a plurality of areas H3, and determines the angle of slope $\theta1$ of each area H3 based on the slope information relating to the agricultural field H1. The control unit 51 then compares the angle of slope $\theta1$ of each area H3 with the predetermined angle range $\theta t1$ to $\theta t2$. If the angle of slope $\theta1$ is within the predetermined angle range $\theta t1$ to $\theta t2$, the control unit 51 determines that the area H3 is a sloping area H1s of the agricultural field H1 and the agricultural field map MP2. If the angle of slope $\theta1$ is below the predetermined angle range $\theta t1$ to $\theta t2$, the control unit 51 determines that the area H3 is a non-sloping area H1f of the agricultural field H1 and the agricultural field map MP2.

The control unit 51 then creates turn-route-portion(s)-for-sloping-ground L2b for the working vehicle 1 to turn from one of work route portions L1 to another of the work route portions L1 in the area(s) H3 that is/are the sloping area H1s in the headland E1 of the agricultural field map MP2. The control unit 51 creates normal turn route portion(s) L2a for the working vehicle 1 to turn from one of work route portions L1 to another of the work route portions L1 in the area(s) H3 that is/are the non-sloping area H1f in the headland E1 of the agricultural field map MP2. It is noted that the control unit 51 may be configured or programmed to, if the angle of slope $\theta1$ in an area H3 is above the predetermined angle range $\theta t1$ to $\theta t2$, determine that the area H3 is a steeply sloping ground of the agricultural field H1 and the agricultural field map MP2, and stop creating the turn route portion.

The control unit 51 may be configured or programmed to calculate the magnitude and the direction of the centrifugal force F2 acting on the working vehicle 1 based on the vehicle speed, the weight, and the turning radius (radius of the arc portions L2q1 to L2q4) of the working vehicle 1 during turn. The control unit 51 may be configured or programmed to then create a turn-route-portion-for-sloping-ground L2b including an arc portion in which the centrifugal force F2 acting on the working vehicle 1 in a direction that is downward along the sloping direction T1 of the location where the working vehicle 1 turns and that is at an acute angle to the sloping direction T1 is only below a predetermined value.

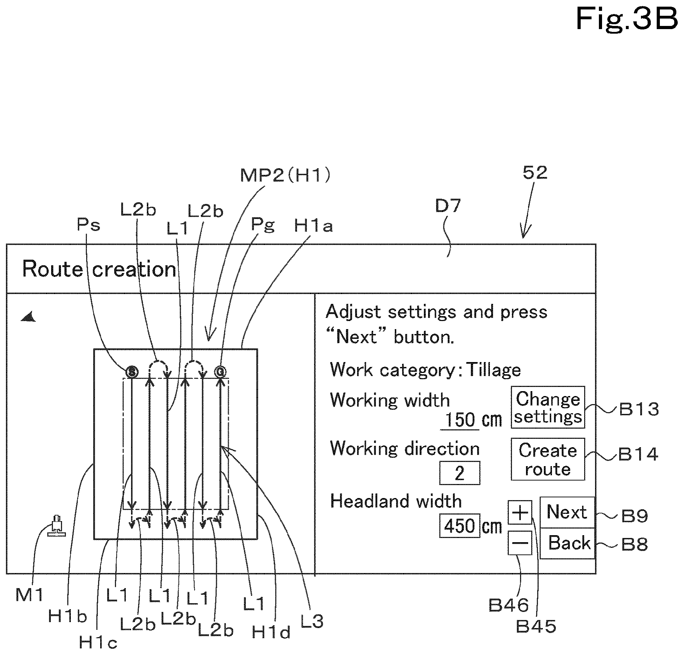

As described earlier, after creating the travel route L3 including the plurality of work route portions L1 and at least one of the normal turn route portion(s) L2a or the turn-route-portion(s)-for-sloping-ground L2b on the agricultural field map MP2, the control unit 51 causes the display operation interface 52 to display the travel route L3 on the agricultural field map MP2 in the route creation screen as shown in FIG. 3B.

When the user changes settings information such as the working direction, the headland width, and/or the working width in the route creation screen D7 and then operates the "route creation" key B14 again, the control unit 51 defines the headland E1, the central area C1, and the travel route L3 on the agricultural field map MP2 as described above. That is, the control unit 51 changes at least one of the headland E1, the central area C1, the work route portions L1, or the turn route portions L2a, L2b according to change(s) in at least one of the working condition, the device information relating to the working device 2 or the agricultural field information. The user can change the working condition and/or the like while looking at the travel route L3, etc., displayed on the route creation screen D7, and define the travel route L3 appropriately.

When the user operates a "next" key B9 after the travel route L3 is displayed on the route creation screen D7, the control unit 51 causes the display operation interface 52 to display the travel control screen D8 shown in FIG. 4. The control unit 51 generates travel data based on settings information stored in the storing unit 53 and the internal memory, and transmits (outputs) the travel data to the control device 60 of the working vehicle 1 via the communicator 54. The travel data includes information indicating the device information relating to the working device 2, information indicating the agricultural field map MP2, information indicating the travel route L3, information indicating the central area C1, information indicating the headland E1, and/or the like.

The travel control screen D8 displays the manner in which agricultural work is performed by the working device 2 while the working vehicle 1 travels in the agricultural field H1. The travel control screen D8 displays the agricultural field map MP2, the travel route L3, the working vehicle symbol M2, the traveling status of the working vehicle 1, the keys and the like. The control unit 51 acquires the actual position of the vehicle body 3 detected by the position detector 40 at predetermined intervals via the communicator 54, and always displays the working vehicle symbol M2 at the position on the agricultural field map MP2 that corresponds to the position of the vehicle body 3. That is, the working vehicle symbol M2 on the travel control screen D8 indicates the actual position of the vehicle body 3 of the working vehicle 1.

For example, the user manually operates the working vehicle 1 while looking at the travel control screen D8 to move the working vehicle 1 to the position corresponding to the start point Ps on the travel route L3, and then the user performs a predetermined operation to enter an automatic traveling mode using a mode switch 62b included in the manual operator 62 (FIG. 1). With this, the control device 60 enters the automatic traveling mode, and causes the working device 2 to perform agricultural work (ground work) on the agricultural field H1 while causing the vehicle body 3 to travel by automatic operation based on the travel data received from the route creator 50 and the position of the vehicle body 3 detected by the position detector 40.

Specifically, the control device 60 first reads the travel data, and then determines the headland E1, the travel route L3, the start point Ps and the goal point Pg. The control device 60 then causes the working device 2 to perform ground work while causing the vehicle body 3 to travel along the work route portions L1 from the start point Ps by automatic operation based on the work route portions L1 included in the travel route L3 and the position of the vehicle body 3. It is noted that the travel control screen D8 shown in FIG. 4 indicates the traveling state of the working vehicle 1 and the working state of the working device 2 after a period of time from the start of the automatic operation of the working vehicle 1.

The control device 60 performs the automatic steering of the vehicle body 3 in the automatic traveling mode. Specifically, the control device 60 calculates the deviation of the position of the vehicle body 3 detected by the position detector 40 from the corresponding work route portion L1. When the deviation is less than a threshold, the control device 60 maintains the angle of rotation of the steering shaft 31 (FIG. 1). When the deviation of the position of the vehicle body 3 from the work route portion L1 is equal to or greater than the threshold and the vehicle body 3 is positioned leftward of the work route portion L1, the control device 60 rotates the steering shaft 31 such that the vehicle body 3 is steered right (automatic steering). When the deviation of the position of the vehicle body 3 from the work route portion L1 is equal to or greater than the threshold and the vehicle body 3 is positioned rightward of the work route portion L1, the control device 60 rotates the steering shaft 31 such that the vehicle body 3 is steered left. The control device 60 also automatically changes the travel speed of the vehicle body 3 based on the work route portion L1 and the position of the vehicle body 3.

When the vehicle body 3 and the working device 2 reach the end point of one of work route portions L1, the control device 60 temporarily stops ground work performed by the working device 2, and, based on the turn route portion L2a, L2b continuous with the one of the work route portions L1 and based on the position of the vehicle body 3, causes the vehicle body 3 to turn toward the starting point of the other of the work route portions L1 connected to the turn route portion L2a, L2b. Also in so doing, the control device 60 also calculates the deviation of the position of the vehicle body 3 from the turn route portion L2a, L2b, controls the steering system 29 such that the deviation is less than the threshold, and controls the traveling direction and the travel speed of the vehicle body 3. In the case where the working device 2 is configured to perform agricultural while in contact with the ground, such as a tiller, the control device 60 causes the lifter 8 to raise the working device 2 to separate the working device 2 from the ground when the working vehicle 1 turns.

The control device 60 then, when the vehicle body 3 reaches the starting point of the of the work route portions L1, restarts ground work performed by the working device 2 when starting causing the vehicle body 3 to travel by automatic operation based on the other of the work route portions L1. In the case where the working device 2 is configured to perform agricultural work while in contact with the ground, the control device 60 causes the lifter 8 to lower the working device 2 to bring the working device 2 into contact with the ground when performing ground work.

In the above-described manner, the working vehicle 1 performs the automatic operation in which the working vehicle 1 travels straight back and forth in the central area C1 along the plurality of work route portions L1, performs ground work on the central area C1 using the working device 2, and turns along the turn route portions L2a, L2b in the headland E1. When the vehicle body 3 and the working device 2 reach the goal point Pg, the control device 60 stops the automatic traveling mode and causes the vehicle body 3 and the working device 2 to stop. With this, agricultural work performed in the automatic traveling mode of the working vehicle 1 and the working device 2 is completed.

The control device 60 is configured or programmed to not only cause the working device 2 to perform agricultural work by causing the working vehicle 1 to travel and turn while automatically operating the working vehicle 1 based on the travel route L3 as described above, but also cause the working device 2 to perform agricultural work by causing the working vehicle 1 to travel and turn while automatically steering the working vehicle 1 based on the travel route L3. That is, the plurality of work route portions L1 and the turn route portions L2a, L2b created by the route creator 50 can be used not only for the automatic operation of the working vehicle 1 but also for the automatic steering operation of the working vehicle 1. Also when the working vehicle 1 performs the automatic steering operation, the control unit 51 of the route creator 50 may cause the display operation interface 52 to display the travel route L3, the position of the vehicle body 3 and the like. Also when the user manually operates the working vehicle 1 to cause the working vehicle 1 to travel and turn and cause the working device 2 to perform agricultural work, the control unit 51 may cause the display operation interface 52 to display the travel route L3, the position of the vehicle body 3 and the like.

The above-described example embodiments discuss examples in which the control unit 51 creates the plurality of work route portions L1 and the turn route portions L2a, L2b for tillage. Note, however, that the control unit 51 may be configured or programmed to allow the user to select another type of agricultural work and create a plurality of work route portions L1 and turn route portions L2a, L2b for the selected agricultural work on the agricultural field map MP2. The control unit 51 may be configured or programmed to create work route portion(s) for the working vehicle 1 to travel to perform agricultural work using the working device 2 also in the headland E1. In this case, a worker may cause the working vehicle 1 to travel and turn by automatic operation, automatic steering operation or manual operation and perform agricultural work using the working device 2 in the headland E1.

The above-described example embodiments discuss examples in which, before the working vehicle 1 performs the automatic traveling mode, the control unit 51 creates the travel route L3 including the plurality of work route portions L1 and the turn route portions L2a, L2b on the agricultural field map MP2 and outputs the travel data including the travel route L3 to the working vehicle 1 via the communicator 54. Note, however, that this does not imply any limitation. As another example, the control unit 51 may be configured or programmed to, before the working vehicle 1 performs the automatic traveling mode, create a plurality of work route portions L1 and output travel data including the plurality of work route portions L1 to the control device 60 via the communicator 54. The control unit 51 may be configured or programmed to then, while performing the automatic traveling mode, based on the position of the working vehicle 1 detected by the position detector 40 and the slope information relating to the agricultural field H1, create a turn-route-portion-for-sloping-ground L2b or a normal turn route portion L2a for the working vehicle 1 to turn from one of work route portions L1 to another of the work route portions L1, and output the turn-route-portion-for-sloping-ground L2b or the normal turn route portion L2a to the control device 60 via the communicator 54. Various input information such as the agricultural field information including the slope information relating to the agricultural field H1, the device information relating to the working device 2, the working condition relating to agricultural work, and/or the vehicle information relating to the working vehicle 1 may be input by the user into the route creator 50 via the display operation interface 52. The various input information may be acquired by the control unit 51 from an external device such as a server or database in the cloud via the communicator 54 automatically or in response to an instruction from the user, and input into the route creator 50.

The above-described example embodiments discuss examples in which the control unit 51 creates the plurality of work route portions L1 and the turn route portions L2a, L2b on the agricultural field map MP2 indicating the rectangular agricultural field H1 and the working vehicle 1 travels and turns based on the work route portions L1 and the turn route portions L2a, L2b to perform agricultural work using the working device 2. Note, however, that this does not imply any limitation. As another example, the control unit 51 may create a plurality of work route portions L1 and turn route portions L2a, L2b on an agricultural field map indicating an agricultural field H1 having an irregular shape other than a rectangular shape. Then, the control device 60 or a worker may cause the working vehicle 1 to travel and turn based on the work route portions L1 and the turn route portions L2a, L2b to perform agricultural work using the working device 2.

The control unit 51 may be configured or programmed to, based on map information relating to a specific location other than the agricultural field H1, the vehicle information relating to the working vehicle 1 and the like input via the display operation interface 52 or the communicator 54, create a travel route for the working vehicle 1 including route portion(s) for the working vehicle 1 to travel straight at the specific location and turn route portion(s) for the working vehicle 1 to turn at the specific location. The map information includes slope information including the sloping direction, the angle of slope, the altitude, and/or the like of the specific location.

For example, the control unit 51, when determining that the specific location is the sloping ground Hs sloping at an angle within a predetermined angle range based on the slope information relating to the specific location, creates a turn-route-portion-for-sloping-ground L2b for the working vehicle 1 to turn at the specific location. When determining that the specific location is a non-sloping ground not sloping or sloping at an angle below the predetermined angle range, the control unit 51 creates a normal turn route portion L2a for the working vehicle 1 to turn at the specific location.

The control unit 51 transmits also the travel route including the turn route portions L2a, L2b in the specific location to the control device 60 of the working vehicle 1 via the communicator 54. The control device 60 controls, based on the travel route in the specific location, the position of the working vehicle 1, and the like, the driving of the prime mover 4, the transmission 5, the brake 6, the steering system 29, the lifter 8 and the working device 2 to automatically cause the working vehicle 1 to travel and to be steered to turn based on the turn route portions L2a, L2b.

The above-described example embodiments discuss examples in which the route creator 50 includes a portable tablet computer. As another example, the route creator may include at least one of, for example, a smartphone, a terminal device fixed to the working vehicle 1, a computer or a server located at a distance from the working vehicle 1, a server in the cloud or the like. Software program(s) indicating the procedure of creating the work route portion shown in FIG. 5 and the procedure of creating the turn route portion shown in FIG. 7 may be stored in a server in the cloud, and the computer having the software program(s) installed thereon may create the travel route L3 including the work route portion(s) L1 and the turn route portion(s) L2a, L2b. The computer may cause a display connected thereto to display the travel route L3 and output the travel data indicating the travel route L3 and the like to the working vehicle 1.

The above-described example embodiments include the following features and achieve effects.

(Item 1) A travel assistance system 100 according to an example embodiment of the present invention is a system to assist a working vehicle 1 with travel, including a route creator 50 including an input interface 52, 54 (display operation interface 52, communicator 54) configured or programmed to receive input of slope information relating to a sloping ground Hs, and a control unit 51 configured or programmed to determine one of boundary directions T2 by rotating a sloping direction T1 of the sloping ground Hs determined from the slope information by a predetermined angle θ2 leftward relative to the sloping direction T1, and the other of the boundary directions T2 by rotating the sloping direction T1 by the predetermined angle θ2 rightward relative to the sloping direction T1, and create a turn-route-portion-for-sloping-ground L2b (L2b1 to L2b7) for a working vehicle 1 to turn on the sloping ground Hs such that only a centrifugal force F2 toward a limiting zone K2 of the sloping ground Hs acts on the working vehicle 1, the limiting zone K2 being a portion of the sloping ground Hs that extends upward from the boundary directions T2.

(Item 15) A method of creating a route according to an example embodiment of the present invention is a method of creating a route for a working vehicle 1 to travel, the method including causing a route creator 50 to receive, via an input interface 52, 54, input of slope information relating to a sloping ground Hs, and causing a control unit 51 included in the route creator 50 to create a turn-route-portion-for-sloping-ground L2b (L2b1 to L2b7).

With this configuration, when the working vehicle 1 turns along the turn-route-portion-for-sloping-ground L2b (L2b1 to L2b7), the centrifugal force F2 toward the outside of the limiting zone K2 (toward a prohibiting zone K1) does not act on the working vehicle 1, and the centrifugal force F2 toward the interior of the limiting zone K2 acts on the working vehicle 1. That is, the centrifugal force F2 does not or substantially does not act on the working vehicle 1 downward along the sloping ground Hs, and the centrifugal force F2 acts or substantially acts on the working vehicle 1 upward along the sloping ground Hs, making it possible to cause the working vehicle 1 to stably turn on the sloping ground Hs. This also makes it possible to eliminate or reduce the likelihood that the working vehicle 1 will overturn.

(Item 2) In item 1, the control unit 51 is configured or programmed to change the predetermined angle θ2 according to an angle of slope of the sloping ground Hs determined from the slope information. With this, it is possible to appropriately determine the limiting zone K2 used to restrict the direction of the centrifugal force F2 acting on the working vehicle 1 and the boundary directions T2 used to determine the limiting zone K2, according to the slope state of the sloping ground Hs.

(Item 3) In item 1 or 2, the control unit 51 is configured or programmed to create the turn-route-portion-for-sloping-ground L2b (L2b1 to L2b7) such that the turn-route-portion-for-sloping-ground L2b (L2b1 to L2b7) does not include a lower arc Ua1 positioned outside the limiting zone K2 and includes an upper arc Ua2 positioned within the limiting zone K2, the lower arc Ua1 and the upper arc Ua2 being included in an imaginary circle U1 centered on an intersection Q1 of the sloping direction T1 of the sloping ground Hs and the boundary directions T2. The turn-route-portion-for-sloping-ground L2b (L2b1 to L2b7) is a turn route portion for the working vehicle 1 to turn by switching the direction of travel. With this, the centrifugal force F2 in a direction that is downward along the sloping direction T1 and that is at an acute angle to the sloping direction T1 of the sloping ground Hs does not or substantially does not act on the working vehicle 1, and the centrifugal force F2 in a direction that is upward along the sloping direction T1 and that is at an acute angle to the sloping direction T1 acts or substantially acts on the working vehicle 1, making it possible for the working vehicle 1 to turn on the sloping ground Hs more stably.

(Item 4) In any one of items 1 to 3, the input interface 52, 54 is configured or programmed to receive input of agricultural field information indicating an agricultural field H1, device information relating to a working device 2 connected to the working vehicle 1 and a working condition relating to work performed by the working device 2 while the working vehicle 1 travels in the agricultural field H1, and the control unit 51 is configured or programmed to create a plurality of work route portions L1 for the working vehicle 1 to travel to perform work using the working device 2 on an agricultural field map MP2 indicating the agricultural field H1, based on the agricultural field information, the device information, and the working condition, and when determining that the agricultural field H1 is the sloping ground Hs sloping at an angle within a predetermined angle range $\theta t1$ to $\theta t2$ based on the slope information relating to the agricultural field H1 included in the agricultural field information, create the turn-route-portion-for-sloping-ground L2b (L2b1 to L2b7) for the working vehicle 1 to turn from one of the plurality of work route portions L1 to another of the plurality of work route portions L1 on the agricultural field map MP2. With this, it is possible to perform work using the working device 2 while causing the working vehicle 1 to travel along the work route portions L1 in the sloping agricultural field H1, and possible to cause the working vehicle 1 to turn stably along the turn-route-portion(s)-for-sloping-ground L2b (L2b1 to L2b7).

(Item 5) In item 4, the control unit 51 is configured or programmed to, when determining that the agricultural field H1 is a non-sloping ground not sloping or sloping at an angle below the predetermined angle range based on the slope information relating to the agricultural field H1, create a predetermined normal turn route portion L2a for the working vehicle 1 to turn from one of the plurality of work route portions L1 to another of the plurality of work route portions L1 on the agricultural field map MP2. With this, in the case where the agricultural field H1 is not the sloping ground Hs, the control unit 51 creates the simple predetermined turn route portion(s) L2a for the working vehicle 1 to turn without having to switch the direction of travel, and the working vehicle 1 turns along the predetermined normal turn route portion L2a with a simple movement, making it possible to reduce the processing load on the control unit 51 and reduce the burden of operating or controlling the working vehicle 1.

(Item 6) In item 5, the control unit 51 is configured or programmed to determine an outline (agricultural field edges H1a to H1d), a sloping direction T1, and an angle of slope $\theta 1$ of the agricultural field H1 from the agricultural field information, determine a working direction Z1 and a headland width Wp from the working condition, determine a working width Wa of the working device 2 from the device information, define a headland E1 and a central area C1 located inward of the headland E1 on the agricultural field map MP2 based on the outline and the headland width Wp of the agricultural field H1, create the plurality of work route portions L1 in the central area C1 on the agricultural field map MP2 based on the working direction Z1 and the working width Wa, and create the turn-route-portion-for-sloping-ground L2a (L2b1 to L2b7) extending within the headland E1 or extending in both the headland E1 and the central area C1 of the agricultural field map MP2 based on the sloping direction T1 and the angle of slope of the agricultural field H1 and based on the working direction Z1. With this, it is possible to perform work on the central area C1 using the working device 2 while causing the working vehicle 1 to travel in the agricultural field H1 which is the sloping ground Hs, and possible to cause the working vehicle 1 to stably turn along the turn-route-portion-for-sloping-ground L2b (L2b1 to L2b7) in the headland E1 or at a boundary between the headland E1 and the central area C1 without sticking out of the agricultural field H1.

(Item 7) In any one of items 4 to 6, the control unit 51 is configured or programmed to create the turn-route-portion-for-sloping-ground L2b on the agricultural field map MP2 when (i) the angle of slope $\theta 1$ of the agricultural field H1 determined from the slope information relating to the agricultural field H1 is within the predetermined angle range $\theta t1$ to $\theta t2$ and (ii) a direction difference $\Delta \theta$ between the sloping direction T1 of the agricultural field H1 determined from the slope information and a working direction Z1 determined from the working condition is equal or less than a predetermined value $\Delta \theta t$, and stop creating the turn-route-portion-for-sloping-ground L2b when (i) the angle of slope $\theta 1$ of the agricultural field H1 is above the predetermined angle range $\theta t1$ to $\theta t2$, or (ii) the angle of slope $\theta 1$ is within the predetermined angle range $\theta t1$ to $\theta t2$ but the direction difference $\Delta \theta$ between the sloping direction T1 and the working direction Z1 is above the predetermined value $\Delta \theta t$. With this, the turn route portions L2a, L2b are not created when the agricultural field H1 is a steeply sloping ground sloping at an angle above the predetermined angle range $\theta t1$ to $\theta t2$, making it possible to eliminate or reduce the likelihood that the working vehicle 1 will overturn on the steeply sloping ground. Furthermore, even if the agricultural field H1 is the sloping ground Hs sloping at an angle within the predetermined angle range $\theta t1$ to $\theta t2$, the turn-route-portion(s)-for-sloping-ground L2b is/are not created when the direction difference $\Delta \theta$ between the sloping direction T1 of the agricultural field H1 and the working direction Z1 is above the predetermined value $\Delta \theta t$, making it possible to eliminate or reduce the likelihood that the working vehicle 1 will stick out of the agricultural field H1 when the working vehicle 1 turns.

(Item 8) In any one of items 4 to 7, the control unit 51 is configured or programmed to, when determining that the agricultural field H1 is the sloping ground Hs based on the slope information relating to the agricultural field H1, determine a travel order in which the plurality of work route portions L1 are to be traveled by the working vehicle 1 based on the sloping direction T1 and the angle of slope $\theta 1$ of the agricultural field H1 determined from the slope information and create the turn-route-portion-for-sloping-ground L2b (L2b1 to L2b7) according to the travel order. With this, it is possible to perform work using the working device 2 while causing the working vehicle 1 to stably travel along the plurality of work route portions L1, and cause the working vehicle 1 to stably turn along the turn-route-portion-for-sloping-ground L2b (L2b1 to L2b7), in the agricultural field H1 which is the sloping ground Hs.

(Item 9) In any one of items 4 to 8, the route creator 50 includes a memory and/or a storage 53 to store a plurality of types of turning patterns (patterns of the turn-route-portions-for-sloping-ground L2b1 to L2b7) of the working vehicle 1, and the control unit 51 is configured or programmed to, when determining that the agricultural field is the sloping ground Hs, select one of the plurality of types of turning patterns based on the sloping direction T1 of the agricultural field H1 determined from the slope information and based on an interval Y1 between one of the work route portions L1 and another of the plurality of work route portions L1, and create the turn-route-portion-for-sloping-ground L2b (for example, one of the plurality of turn-route-portion-for-sloping-ground L2b1 to L2b7) using the selected turning pattern. With this, it is possible, according to the sloping direction T1 of the agricultural field H1 which is the sloping ground Hs and the interval Y1 between the work route portions L1, to create the appropriate turn-route-portion-for-sloping-ground L2b and reduce the processing load on the control unit 51.

(Item 10) In any one of items 1 to 9, the input interface 52, 54 is configured or programmed to receive input of agricultural field information indicating an agricultural field H1, device information relating to a working device 2 connected to the working vehicle 1 and a working condition relating to work performed by the working device 2 while the working vehicle 1 travels in the agricultural field H1, and the control unit 51 is configured or programmed to create a plurality of work route portions L1 for the working vehicle 1 to travel to perform work using the working device 2 on an agricultural field map MP2 indicating the agricultural field H1, based on the agricultural field information, the device information and the working condition, and the control unit 51 is configured or programmed to determine, from the agricultural field information, which area of the agricultural field H1 and the agricultural field map MP2 is a sloping area H1s sloping at an angle within a predetermined angle range θt1 to θt2 and which area of the agricultural field H1 and the agricultural field map MP2 is a non-sloping area H1f not sloping or sloping at an angle below the predetermined angle range θt1 to θt2, create the turn-route-portion-for-sloping-ground L2b in the sloping area H1s of the agricultural field map MP2, and create a predetermined normal turn route portion L2a in the non-sloping area H1f of the agricultural field map MP2. With this, it is possible to cause the working vehicle 1 to stably turn along the turn-route-portion-for-sloping-ground L2b in the sloping area H1s of the agricultural field H1 and case the working vehicle 1 to efficiently turn along the predetermined normal turn route portion L2a in the non-sloping area H1f with a simple movement.

(Item 11) The travel assistance system 100 according to any one of items 1 to 10, further including the working vehicle 1 and a display (display operation interface) 52 to display the turn-route-portion-for-sloping-ground L2b. With this, the display 52 displays the agricultural field map MP2 including the turn-route-portion-for-sloping-ground L2b created by the route creator 50, allowing a user or a worker to check the displayed turn-route-portion-for-sloping-ground L2b and cause the working vehicle 1 to stably turn based on the turn-route-portion-for-sloping-ground L2b.

(Item 12) The travel assistance system 100 according to item 5 or 10, further including the working vehicle 1, wherein the working vehicle 1 includes a vehicle body 3 to travel, a position detector 40 to detect a position of the vehicle body 3, and a control device 60 configured or programmed to perform an automatic traveling mode to automatically steer the vehicle body 3 and cause the vehicle body 3 to travel based on the plurality of work route portions L1 output from an output interface (communicator) 54 included in the route creator 50, based on the turn-route-portion-for-sloping-ground L2b or the predetermined normal turn route portion L2a output from the output interface (communicator) 54, and based on the position of the vehicle body 3 detected by the position detector 40. With this, the user or the worker can cause the working vehicle 1 to stably turn along the turn-route-portion-for-sloping-ground L2b or the normal turn route portion L2a while causing the working vehicle 1 to travel by automatic operation in the agricultural field H1 which is the sloping ground or non-sloping ground.

(Item 13) In item 12, the working vehicle 1 includes the route creator 50, and the control device 60 is configured or programmed to cause a working device 2 connected to the vehicle body 3 to perform work while automatically steering the vehicle body 3 and causing the vehicle body 3 to travel based on the turn-route-portion-for-sloping-ground L2b output from the route creator 50 and based on the position of the vehicle body 3 detected by the position detector 40. This allows the user or the worker to perform work using the working device 2 along the work route portion L1 while causing the working vehicle 1 to travel by automatic operation in the agricultural field H1 which is the sloping ground or the non-sloping ground.

(Item 14) In item 13, the control unit 51 is configured or programmed to, before performing the automatic traveling mode, create the plurality of work route portions L1, and output the plurality of work route portions L1 to the control device 60 via the output interface 54, and, before or while performing the automatic traveling mode, create the turn-route-portion-for-sloping-ground L2b or the predetermined normal turn route portion L2a based on the slope information relating to the agricultural field H1, and output the turn-route-portion-for-sloping-ground L2b or the predetermined normal turn route portion L2a to the control device 60 via the output interface 54.

Since the control unit 51 creates the plurality of work route portions L1 and at least one of the turn-route-portion(s)-for-sloping-ground L2b or the normal turn route portion(s) L2a and outputs them to the control device 60 before the working vehicle 1 operates in the automatic traveling mode as described in item 14, it is possible to reduce the processing load on the control device 60 during the automatic traveling mode. Furthermore, since the control unit 51 creates the plurality of work route portions L1 and outputs them to the control device 60 before the working vehicle 1 operates in the automatic traveling mode, and the control unit 51 creates at least one of the turn-route-portion(s)-for-sloping-ground L2b or the normal turn route portion(s) L2a and outputs them to the control device 60 during the automatic traveling mode, it is possible to create the turn-route-portion(s)-for-sloping-ground L2b and/or the normal turn route portion(s) L2a according to the slope state of the agricultural field H1 during the automatic traveling mode and cause the working vehicle 1 to stably turn based on the turn-route-portion(s)-for-sloping-ground L2b and/or the normal turn route portion(s) L2a.

While embodiments of the present invention have been described above, it is to be understood that the embodiments disclosed herein are considered as examples in all aspects and are not considered as limitations. The scope of the present invention is to be determined not by the foregoing description but by the claims, and is intended to include all variations and modifications within the scope of the claims and their equivalents.

Reference Signs List

| | |
|---|---|
| 1 | Working vehicle |
| 2 | Working device |
| 3 | Vehicle body |
| 40 | Position detector |
| 50 | Route creator |
| 52 | Display operation interface (input interface, display) |
| 53 | Storing unit |
| 54 | Communicator (input interface, output interface) |
| 60 | Control device |
| 100 | Travel assistance system |
| C1 | Central area |
| L1 | Headland |
| F2 | Centrifugal force |
| H1 | Agricultural field |
| H1f | Non-sloping area |
| H1s | Sloping area |
| Hs | Sloping ground |
| K2 | Limiting zone |
| L1 | Work route portion |
| L2a | Normal turn route portion |
| L2b, L2b1-L2b7 | Turn-route-portion-for-sloping-ground |
| L2q1-L2q4 | Arc portion |
| MP2 | Agricultural field map |
| Q1 | Center, intersection |
| T1 | Sloping direction |
| T2 | Boundary direction |
| U1 | Imaginary circle |
| Ua1 | Lower arc |
| Ua2 | Upper arc |
| Wa | Working width |
| Wp | Headland width |
| Y1 | Interval between work route portions |
| Z1 | Working direction |
| $\theta 1$ | Angle of slope |
| $\theta 2$ | Predetermined angle |
| $\theta t1$ to $\theta t2$ | Predetermined angle range |
| $\Delta\theta$ | Direction difference |
| $\Delta\theta t$ | Predetermined value |

**Claims**

1. A travel assistance system comprising:
   a route creator including:

   an input interface configured or programmed to receive input of slope information relating to a sloping ground; and
   a control unit configured or programmed to:

determine one of boundary directions by rotating a sloping direction of the sloping ground determined from the slope information by a predetermined angle leftward relative to the sloping direction, and the other of the boundary directions by rotating the sloping direction by the predetermined angle rightward relative to the sloping direction; and

create a turn-route-portion-for-sloping-ground for a working vehicle to turn on the sloping ground such that only a centrifugal force toward a limiting zone of the sloping ground acts on the working vehicle, the limiting zone being a portion of the sloping ground that extends upward from the boundary directions.

2. The travel assistance system according to claim 1, wherein

the control unit is configured or programmed to change the predetermined angle according to an angle of slope of the sloping ground determined from the slope information.

3. The travel assistance system according to claims 1 or 2, wherein

the control unit is configured or programmed to create the turn-route-portion-for-sloping-ground such that the turn-route-portion-for-sloping-ground does not include a lower arc positioned outside the limiting zone and includes an upper arc positioned within the limiting zone, the lower arc and the upper arc being included in an imaginary circle centered on an intersection of the sloping direction of the sloping ground and the boundary directions.

4. The travel assistance system according to any one of claims 1 to 3, wherein

the input interface is configured or programmed to receive input of agricultural field information indicating an agricultural field, device information relating to a working device connected to the working vehicle, and a working condition relating to work performed by the working device while the working vehicle travels in the agricultural field; and

the control unit is configured or programmed to:

create a plurality of work route portions for the working vehicle to travel to perform work using the working device on an agricultural field map indicating the agricultural field, based on the agricultural field information, the device information, and the working condition; and

when determining that the agricultural field is the sloping ground sloping at an angle within a predetermined angle range based on the slope information relating to the agricultural field included in the agricultural field information, create the turn-route-portion-for-sloping-ground for the working vehicle to turn from one of the plurality of work route portions to another of the plurality of work route portions on the agricultural field map.

5. The travel assistance system according to claim 4, wherein

the control unit is configured or programmed to, when determining that the agricultural field is a non-sloping ground not sloping or sloping at an angle below the predetermined angle range based on the slope information, create a predetermined normal turn route portion for the working vehicle to turn from one of the plurality of work route portions to another of the plurality of work route portions on the agricultural field map.

6. The travel assistance system according to claim 5, wherein

the control unit is configured or programmed to:

determine an outline, the sloping direction, and an angle of slope of the agricultural field from the agricultural field information;

determine a working direction and a headland width from the working condition;

determine a working width of the working device from the device information;

define a headland and a central area located inward of the headland on the agricultural field map based on the outline and the headland width of the agricultural field;

create the plurality of work route portions in the central area on the agricultural field map based on the working direction and the working width; and

create the turn-route-portion-for-sloping-ground extending within the headland or extending in both the headland and the central area of the agricultural field map based on the sloping direction and the angle of slope of the agricultural field and based on the working direction.

7. The travel assistance system according to any one of claims 4 to 6, wherein

the control unit is configured or programmed to:

create the turn-route-portion-for-sloping-ground when (i) the angle of slope of the agricultural field determined from the slope information is within the predetermined angle range and (ii) a direction difference between the sloping direction of the agricultural field determined from the slope information and a working direction determined from the working condition is equal to or less than a predetermined value; and

stop creating the turn-route-portion-for-sloping-ground when (i) the angle of slope is above the predetermined angle range, or (ii) the angle of slope is within the predetermined angle range but the direction difference is above the predetermined value.

8. The travel assistance system according to any one of claims 4 to 7, wherein

the control unit is configured or programmed to, when determining that the agricultural field is the sloping ground based on the slope information relating to the agricultural field, determine a travel order in which the plurality of work route portions are to be traveled by the working vehicle based on the sloping direction and the angle of slope of the agricultural field determined from the slope information, and create the turn-route-portion-for-sloping-ground according to the travel order.

9. The travel assistance system according to any one of claims 4 to 8, wherein

the route creator includes a memory and/or a storage to store a plurality of types of turning patterns of the working vehicle; and

the control unit is configured or programmed to, when determining that the agricultural field is the sloping ground, select one of the plurality of types of turning patterns based on the sloping direction of the agricultural field determined from the slope information and based on an interval between one of the plurality of work route portions and another of the plurality of work route portions, and create the turn-route-portion-for-sloping-ground using the selected turning pattern.

10. The travel assistance system according to any one of claims 1 to 9, wherein

the input interface is configured or programmed to receive input of agricultural field information indicating an agricultural field, device information relating to a working device connected to the working vehicle, and a working condition relating to work performed by the working device while the working vehicle travels in the agricultural field; and

the control unit is configured or programmed to:

create a plurality of work route portions for the working vehicle to travel to perform work using the working device on an agricultural field map indicating the agricultural field, based on the agricultural field information, the device information, and the working condition;

determine, from the agricultural field information, which area of the agricultural field and the agricultural field map is a sloping area sloping at an angle within a predetermined angle range and which area of the agricultural field and the agricultural field map is a non-sloping area not sloping or sloping at an angle below the predetermined angle range;

create the turn-route-portion-for-sloping-ground for the working vehicle to turn from one of the plurality of work route portions to another of the plurality of work route portions in the sloping area of the agricultural field map; and

create a predetermined normal turn route portion for the working vehicle to turn from one of the plurality of work route portions to another of the plurality of work route portions in the non-sloping area of the agricultural field map.

11. The travel assistance system according to any one of claims 1 to 10, further comprising:

the working vehicle; and
a display to display the turn-route-portion-for-sloping-ground.

12. The travel assistance system according to claim 5 or 10, further comprising the working vehicle, wherein the working vehicle includes:

a vehicle body to travel;
a position detector to detect a position of the vehicle body; and
a control device configured or programmed to perform an automatic traveling mode to automatically steer the vehicle body and cause the vehicle body to travel based on the plurality of work route portions output from an output interface included in the route creator, based on the turn-route-portion-for-sloping-ground or the predetermined normal turn route portion output from the output interface, and based on the position of the vehicle body detected by the position detector.

13. The travel assistance system according to claim 12, wherein

the working vehicle includes the route creator; and
the control device is configured or programmed to cause a working device connected to the vehicle body to perform work while automatically steering the vehicle body and causing the vehicle body to travel based on the turn-route-portion-for-sloping-ground output from the route creator and based on the position of the vehicle body detected by the position detector.

14. The travel assistance system according to claim 13, wherein
the control unit is configured or programmed to:

before performing the automatic traveling mode, create the plurality of work route portions, and output the plurality of work route portions to the control device via the output interface; and
before or while performing the automatic traveling mode, create the turn-route-portion-for-sloping-ground or the predetermined normal turn route portion based on the slope information relating to the agricultural field, and output the turn-route-portion-for-sloping-ground or the predetermined normal turn route portion to the control device via the output interface.

15. A method of creating a route for a working vehicle to travel, the method comprising:

causing a route creator to receive, via an input interface, input of slope information relating to a sloping ground; and
causing a control unit included in the route creator to:

determine one of boundary directions by rotating a sloping direction of the sloping ground determined from the slope information by a predetermined angle leftward relative to the sloping direction and the other of the boundary directions by rotating the sloping direction by the predetermined angle rightward relative to the sloping direction; and
create a turn-route-portion-for-sloping-ground for a working vehicle to turn on the sloping ground such that only a centrifugal force toward a limiting zone of the sloping ground acts on the working vehicle, the limiting zone being a portion of the sloping ground that extends upward from the boundary directions.

Fig.1

EP 4 675 229 A1

# Fig.2A

$$|F1| = |F2| = m\frac{v^2}{r} = \frac{W}{g} \cdot \frac{v^2}{r}$$

F1 : Centripetal force
F2 : Centrifugal force
 m : Mass of working vehicle
 v : Vehicle speed of working vehicle
 r : Turning radius of working vehicle
W : Weight of working vehicle
 g : Gravitational acceleration

Fig.2B

# Fig.2C

Fig.3A

MP2(H1)　　　　　D7　　　　52

H1a

Route creation

Adjust settings and press
"Next" button.

Work category : Tillage

Working width　　　　Change　～B13
　　　　150 cm　　settings

Working direction　　Create　～B14
　　　2　　　　route

Headland width　　＋　Next　～B9
　　450 cm　　－　Back　～B8

M1　H1b　　H1c　　H1d　　　B45
　　　　　　　　　　　　　　B46

31

Fig.3B

MP2(H1)

L2b  L2b

Ps      L1        Pg  H1a                    D7                    52

Route creation

Adjust settings and press
"Next" button.

Work category : Tillage

Working width
                    150 cm

Change
settings          ⌐B13

Working direction
                    2

Create
route             ⌐B14

Headland width
                    450 cm

+    Next          ∼B9

−    Back          ∼B8

M1
      H1b
            H1c

L1    L1    L1                    L1
      L2b  L2b  L2b    H1d    L3

B46
      B45

Fig.4

Fig.5

```
            ┌─────────────┐
            │    Start    │
            └──────┬──────┘
S1 ┐               │
┌──────────────────▼──────────────────┐
│     Read agricultural field information,     │
│  device information and working condition  │
└──────────────────┬──────────────────┘
S2 ┐               │
┌──────────────────▼──────────────────┐
│  Determine agricultural field edges, working width,  │
│      working direction and headland width      │
└──────────────────┬──────────────────┘
S3 ┐               │
┌──────────────────▼──────────────────┐
│      Determine central area and headland      │
└──────────────────┬──────────────────┘
S4 ┐               │
┌──────────────────▼──────────────────┐
│     Create work route portion in central area     │
└──────────────────┬──────────────────┘
S5 ┐               │
┌──────────────────▼──────────────────┐
│  Store work route portion, central area and headland  │
└──────────────────┬──────────────────┘
                   │
            ┌──────▼──────┐
            │     End     │
            └─────────────┘
```

# Fig.6

Start

S11 ─ Determine sloping direction and angle of slope of agricultural field

S12 ─ Is angle of slope within predetermined angle range?

No (below) → ... No (above) →

Yes ↓

S15 ─ Is direction difference between sloping direction and working direction equal to or less than predetermined value? — No →

S13 ─ Determine travel order in which work route portions are to be traveled, traveling direction, start point and goal point

Yes ↓

S16 ─ Determine travel order in which work route portions are to be traveled, traveling direction, start point and goal point

S18 ─ Stop creating turn route portion

S14 ─ Create and store normal turn route portion

S17 ─ Determine boundary directions Create and store turn-route-portion -for-sloping-ground

End

Fig.7

Fig.8A

＜Agricultural field is level or substantially level＞

MP2（H1）

Ps  L2a  L1  L2a  Pg

H1a

H1b

Hx

S  G

C1

E1

H1d

Z1

H1c

L1  L2a  L1  L2a  L2a  L1  L3

# Fig.8B

Z1

L1

C1

H2c

L2s1

L2a

E1

H1c

L1

L2s1

L2q1

# Fig.9A

<Agricultural field is sloping ground>

Higher portion (higher level)

MP2(H1, Hs)

Lower portion (lower level)

# Fig.9B

Higher portion (higher level)

H1a

E1

F2

1

L2q1

(L2b)

L2b1

T2

K2

X1

Q1

T2

K1

L2s1

L2s1

H2a

C1

U1

Z1

L1

L1

T1

Lower portion (lower level)

# Fig.9C

Higher portion (higher level)

Z1

T1

L1

L1

C1

F2

H2c

L2s1

1

L2s1

L2q2

E1

L2b2
(L2b)

T2

K2

X1

Q1

T2

K1

U1

H1c

Lower portion (lower level)

# Fig.10A

<Agricultural field is sloping ground>

Higher portion (higher level)

Lower portion (lower level)

# Fig.10B

Higher portion (higher level)

Z1

T1

L1

L1

C1

U1

L2s1

H2c

L2s1

T2

K2

X1

Q1

T2

K1

L2q1

F2

L2a

1

E1

H1c

Lower portion (lower level)

# Fig.11

Higher portion (higher level)

Lower portion (lower level)

# Fig.12

Higher portion (higher level)

Lower portion (lower level)

# Fig.13

Higher portion (higher level)

Lower portion (lower level)

# Fig.14

Higher portion (higher level)

Lower portion (lower level)

# Fig.15

Higher portion (higher level)

Lower portion (lower level)

# Fig.16

Higher portion (higher level)

Lower portion (lower level)

# Fig.17

Higher portion (higher level)

Lower portion (lower level)

# Fig.18A

<Agricultural field is sloping ground>

Higher portion (higher level)

Lower portion (lower level)

# Fig.18B

Higher portion (higher level)

Lower portion (lower level)

Fig.19

Higher portion (higher level)

Lower portion (lower level)

# Fig.20

Higher portion (higher level)

Lower portion (lower level)

# Fig.21

Fig.22

## INTERNATIONAL SEARCH REPORT

| International application No. |
|---|
| **PCT/JP2024/005887** |

**A. CLASSIFICATION OF SUBJECT MATTER**

*G01C 21/06*(2006.01)i; *A01B 69/00*(2006.01)i; *G05D 1/242*(2024.01)i; *G05D 1/245*(2024.01)i; *G05D 1/43*(2024.01)i; *G05D 1/617*(2024.01)i; *G05D 1/648*(2024.01)i; *G05D 1/672*(2024.01)i; *G05D 105/05*(2024.01)n; *G05D 105/15*(2024.01)n; *G05D 107/90*(2024.01)n; *G05D 109/10*(2024.01)n; *G05D 111/50*(2024.01)n

FI: G01C21/06; A01B69/00 303Z; G05D1/242; G05D1/245; G05D1/43; G05D1/617; G05D1/648; G05D1/672; G05D105:05; G05D105:15; G05D107:90; G05D109:10; G05D111:50

According to International Patent Classification (IPC) or to both national classification and IPC

**B. FIELDS SEARCHED**

Minimum documentation searched (classification system followed by classification symbols)

G01C21/06; A01B69/00; G05D1/242; G05D1/245; G05D1/43; G05D1/617; G05D1/648; G05D1/672; G05D105/05; G05D105/15; G05D107/90; G05D109/10; G05D111/50

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 2019-170223 A (YANMAR CO., LTD.) 10 October 2019 (2019-10-10)<br>all pages | 1-15 |
| A | WO 2018/139024 A1 (YANMAR CO., LTD.) 02 August 2018 (2018-08-02)<br>all pages | 1 |
| A | JP 2023-3183 A (KUBOTA CORPORATION) 11 January 2023 (2023-01-11)<br>all pages | 1 |
| A | WO 2019/124463 A1 (KUBOTA CORPORATION) 27 June 2019 (2019-06-27)<br>all pages | 1 |

☐ Further documents are listed in the continuation of Box C.　　☑ See patent family annex.

---

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **12 April 2024** | **07 May 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (July 2022)

**INTERNATIONAL SEARCH REPORT**
Information on patent family members

| | International application No. |
|---|---|
| | **PCT/JP2024/005887** |

| Patent document cited in search report | | | Publication date (day/month/year) | Patent family member(s) | | | Publication date (day/month/year) |
|---|---|---|---|---|---|---|---|
| JP | 2019-170223 | A | 10 October 2019 | (Family: none) | | | |
| WO | 2018/139024 | A1 | 02 August 2018 | US | 2020/0033143 | A1 | |
| | | | | US | 2022/0163332 | A1 | |
| | | | | EP | 3567446 | A1 | |
| | | | | JP | 2018-120491 | A | |
| JP | 2023-3183 | A | 11 January 2023 | (Family: none) | | | |
| WO | 2019/124463 | A1 | 27 June 2019 | JP | 2019-106939 | A | |
| | | | | JP | 2019-106940 | A | |
| | | | | JP | 2019-106941 | A | |
| | | | | JP | 2019-106942 | A | |
| | | | | US | 2020/0375095 | A1 | |
| | | | | EP | 3729937 | A1 | |
| | | | | KR | 10-2020-0077593 | A | |
| | | | | CN | 111447827 | A | |

Form PCT/ISA/210 (patent family annex) (July 2022)

**REFERENCES CITED IN THE DESCRIPTION**

**Patent documents cited in the description**

- JP 6663366 B